(19) Europäisches Patentamt
European Patent Office
Office européen des brevets

(11) EP 4 350 947 B1

(12) **EUROPEAN PATENT SPECIFICATION**

(45) Date of publication and mention of the grant of the patent:
**05.11.2025 Bulletin 2025/45**

(21) Application number: **22815650.1**

(22) Date of filing: **23.03.2022**

(51) International Patent Classification (IPC):
***H02J 50/12*** *(2016.01)* ***H02J 50/40*** *(2016.01)*
***H02J 50/70*** *(2016.01)* ***H02J 7/00*** *(2006.01)*
***H02J 7/02*** *(2016.01)* ***H02J 50/90*** *(2016.01)*

(52) Cooperative Patent Classification (CPC):
**H02J 50/12; H02J 50/402; H02J 50/70;**
**H02J 50/90;** H02J 7/02; H02J 2310/48; Y02T 10/70

(86) International application number:
**PCT/JP2022/013436**

(87) International publication number:
**WO 2022/254893 (08.12.2022 Gazette 2022/49)**

(54) **NON-CONTACT POWER FEEDING SYSTEM**

KONTAKTLOSES STROMVERSORGUNGSSYSTEM

SYSTÈME D'ALIMENTATION EN ÉNERGIE SANS CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2021 JP 2021090830**
**09.03.2022 JP 2022035987**

(43) Date of publication of application:
**10.04.2024 Bulletin 2024/15**

(73) Proprietor: **DENSO CORPORATION**
**Kariya-city, Aichi 448-8661 (JP)**

(72) Inventors:
- **SHIBANUMA, Mitsuru**
**Kariya-city, Aichi 4488661 (JP)**
- **TAKAHASHI, Eisuke**
**Kariya-city, Aichi 4488661 (JP)**
- **TAKAHASHI, Masaya**
**Kariya-city, Aichi 4488661 (JP)**
- **YAMAGUCHI, Nobuhisa**
**Kariya-city, Aichi 4488661 (JP)**
- **KATO, Kazuyuki**
**Kariya-city, Aichi 4488661 (JP)**

(74) Representative: **TBK**
**Bavariaring 4-6**
**80336 München (DE)**

(56) References cited:
**JP-A- 2021 023 094 JP-A- 2021 023 094**

EP 4 350 947 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field]

The present disclosure relates to a wireless power supply system.

[Background Art]

JP 2019-71719 A discloses a wireless power supply system for mobile bodies. This wireless power supply system for mobile bodies is equipped with a high-frequency power source, a plurality of power transmission coils connected in parallel to the high-frequency power source, and a power receiving coil mounted on a mobile body. The impedance between the high-frequency power source and the power transmission coil is increased to suppress the current flowing from the high-frequency power source to the power transmission coil when the current flowing from the high-frequency power source to the power transmission coil is less than a threshold value. In addition, a current control element is disposed to reduce the impedance so that the current flowing from the high-frequency power source to the power transmission coil is not suppressed when the current flowing from the high-frequency power source to the power transmission coil is above the threshold value.

In patent literature JP2021023094 A, a power supply system that suppresses supply of a current from a power transmission circuit to a power transmission coil, which does not face a power reception coil, is shown. In an opposite state where a power reception coil included in a power reception device is opposite to the power transmission coil, an input impedance of a power transmission resonator unit is set to be small. In a non-opposite state where the power reception coil is not opposite to the power transmission coil, the input impedance of the power transmission resonator unit is set to be large

[Summary of the Invention]

However, a coupling between a plurality of power transmission coils was not considered in the wireless power supply system for mobile bodies described in JP 2019-71719 A. When a plurality of power transmission coils are sequentially switched to supply power to a power receiving coil, the plurality of power transmission coils are located at positions close to each other. When the plurality of power transmission coils are located in close proximity to each other, adjacent power transmission coils are coupled to each other. When coupling occurs between the power transmission coils, the coupling changes the current flowing from the high-frequency power source to the power transmission coils. Therefore, it was difficult to set a threshold for changing the impedance.

According to an aspect of the present disclosure, there is provided a wireless power supply system for a mobile body equipped with a power receiving unit having a power receiving coil. The wireless power supply system includes an AC power supply unit and a plurality of power transmission units, the plurality of power transmission units are disposed in at least a part of a moving range of the moving body and include a power transmission coil. The wireless power supply system includes a plurality of power transmission units that receive a supply of power from the AC power supply unit and supply power to a power receiving unit via the power transmission coil in a resonance state, and a switching control unit that switches a state of a first power transmission unit to a resonance state when the magnitude of the magnetic flux generated in a first power transmission coil of the first power transmission unit, which is one of the plurality of power transmission units, is greater than a predetermined threshold value, and switches to a non-resonance state when the magnitude is less than the threshold value. The threshold is set as a magnitude that exceeds the magnetic flux generated in the first power transmission coil due to a coupling between the first power transmission coil and a second power transmission coil of a second power transmission unit, which is adjacent to the first power transmission coil. A coupling relationship between the first power transmission coil and the second power transmission coil is a coupling relationship in which a coupling coefficient between the power receiving coil and the first power transmission coil is greater than or equal to the sum of coupling coefficients of the first power transmission coil and the second power transmission coil. According to this aspect, the switching control unit can supply power to the power receiving unit by switching the resonance state of the plurality of power transmission units in sequence by setting the threshold value appropriately and setting the state of the first power transmission unit to resonance or non-resonance according to the magnitude of the magnetic flux passing through the first power transmission coil.

[Brief Description of the Drawings]

The above and other objects, features and advantages of the present disclosure will be made clearer by the following detailed description with reference to the accompanying drawings. The drawings are:

Fig. 1 is an explanatory diagram showing a power transmission system for a small mobile body;
Fig. 2 is an explanatory diagram showing the small mobile body;
Fig. 3 is a schematic circuit diagram of a power transmission unit of the power transmission system and a power receiving unit of the small mobile body;
Fig. 4A is an explanatory diagram showing an example of a configuration for changing the capacitance of a capacitor;
Fig. 4B is an explanatory diagram showing another example of a configuration for changing the capacitance of a capacitor;
Fig. 4C is an explanatory diagram showing yet another example of a configuration for changing the capacitance of a capacitor;
Fig. 5 is an explanatory diagram showing a schematic configuration of a power transmission system having a plurality of power transmission units and a small mobile body;
Fig. 6 is an explanatory diagram showing the relationship between center positions of the power transmission coils and the power receiving coil and the voltage of the power transmission coils when the mobile body moves to the right;
Fig. 7 is an explanatory diagram showing the relationship between the position of the power receiving coil and the coupling coefficient between the power transmission coil and the power receiving coil;
Fig. 8 is an explanatory diagram showing the relationship between the position of the power receiving coil and the coupling coefficient between the two power transmission coils;
Fig. 9 is a side view showing the two power transmission coils and the power receiving coil;
Fig. 10 is a plan view showing two power transmission coils and the power receiving coil;
Fig. 11 is a graph showing the relationship between a distance between two power transmission coils and the coupling coefficient of the two power transmission coils;
Fig. 12 is a graph showing the relationship between the distance between the power transmission coil and the power receiving coil and the coupling coefficient between the power transmission coil and the power receiving coil;
Fig. 13 is an explanatory diagram showing a case where power is supplied using a single power transmission coil;
Fig. 14 is an explanatory diagram showing a case where power is supplied using four power transmission coils;
Fig. 15 is an explanatory diagram comparing the voltage of the first power transmission coil in the case of a single power supply coil and four power supply coils;
Fig. 16 is an explanatory diagram showing a schematic configuration of a power transmission system having a plurality of power transmission units and a small mobile body in a third embodiment;
Fig. 17 is a schematic circuit diagram of a power transmission system of a power transmission system and a power receiving unit of a small mobile body in a fourth embodiment;
Fig. 18 is an explanatory diagram showing a power transmission system for small mobile bodies in a fifth embodiment;
Fig. 19 is an explanatory diagram when power is supplied to two small mobile bodies from a single power transmission coil in the fifth embodiment;
Fig. 20 is an explanatory diagram when power is supplied to two small mobile bodies from four power transmission coils in the fifth embodiment;
Fig. 21 is an explanatory diagram showing a case where power transmission coils are lined up in a straight line in an x direction;
Fig. 22 is an explanatory diagram showing another arrangement of power transmission coils;
Fig. 23 is an explanatory diagram showing yet another arrangement of power transmission coils;
Fig. 24 is an example in which the depth at which the power transmission coil is disposed is varied; and
Fig. 25 is an explanatory diagram showing an example in which the size, number of turns, and shape of the power transmission coil are varied depending on a placement location of the power transmission coil.

[Description of Embodiments]

First Embodiment:

Fig. 1 is an explanatory diagram showing a power transmission system 100 for a small mobile body 200. The power transmission system 100 is equipped with an AC power source 10, an AC power supply unit 20, and power transmission coils 81. In the present embodiment, the power transmission coils 81 are located at least in part of the range of movement of the small mobile body 200. In the example shown in Fig. 1, the power transmission coils 81 are disposed on a plane in a 4 x 5 grid, constituting a coil unit 88. The AC power supply unit 20 and the power transmission coils 81 are connected by transmission line 70. The small mobile body 200 is, for example, a transport device that carries parts and other items in a factory. The small mobile body 200 has a power receiving coil 281 and uses the power receiving coil 281 to receive power wirelessly from the power transmission coil 81 and moves around the factory.
Fig. 2 is an explanatory diagram showing the small mobile body 200. The small mobile body 200 has a battery 210, an AC power supply unit 220, and a power receiving coil 281. The power receiving coil 281 is electromagnetically coupled to the power transmission coil 81 and receives AC power from the power transmission coil 81. The AC power supply unit 220 converts the AC power received by the power receiving coil 281 into direct current. The AC power supply unit 220, for example, has a bridge rectifier circuit and a smoothing capacitor (not shown). The battery 210 stores power converted to direct current by AC power supply unit 220. The power stored in the battery 210 is used to power the small mobile body 200.

Fig. 3 shows a schematic circuit diagram of the power transmission unit 80 of the power transmission system 100 and the power receiving unit 280 of the small mobile body 200. The power transmission unit 80 has a power transmission coil 81 connected in series with the AC power supply unit 20 and a capacitor 82. A resistor 81r in the circuit diagram in Fig. 3 is a parasitic resistance of the power transmission coil 81. The power receiving unit 280 has a power receiving coil 281 connected in series, a capacitor 282, and a load 221. The load 221 is the load of the small mobile body 200 and includes the load of the AC power supply unit 220 and the battery 210.

Here, an inductance of the power transmission coil 81 of the power transmission unit 80 is $L_{g1}$, a parasitic resistance is $r_1$, a capacitance of the capacitor 82 is $C_{g1}$, a voltage effective value of the AC power supply unit 20 is $V_1$, a transmission frequency is f, and n angular frequency is $\omega$. Each frequency $\omega$ is $2\pi f$. In addition, an inductance of the power receiving coil 281 of the power receiving unit 280 is $L_v$, a capacitance of the capacitor 282 is $C_v$, and an electrical resistance of the load 221 is $R_L$.

A case where each of the power transmission units 80 and power receiving units 280 resonance independently will be considered. When the power transmission coil 81 and the capacitor 82 are connected in series, resonance means a state in which the voltage and current generated by the power transmission coil 81 or the power receiving coil 281 are larger than the voltage and current output from the AC power supply unit 20, when considered in terms of voltage and current amplitude. Or, it means a state in which an apparent power generated by the power transmission coil 81 and the power receiving coil 281 is larger than an apparent power at the output of the AC power supply unit 20. In addition, if it is considered that resonance in terms of impedance, resonance means a state in which an imaginary component of the impedance of the transmission unit 80 decreases. Note that the imaginary component of the impedance of the transmission unit 80 may be zero.

The impedance $Z_1$ of the power transmission unit 80 is expressed by the following equation:

$$Z_1 = \{r_1 + j\omega L_{g1} + 1/(j\omega C_{g1})\}$$

In the resonance state, the imaginary component of the impedance $Z_1$ decreases.

If the imaginary component of the impedance Z1 is zero, the impedance $Z_1$ is minimal.

That is:

$$j\omega L_{g1} + 1/(j\omega C_{g1}) = 0$$

Or, bracket the left side of the above equation with j, it becomes:

$$j\{\omega L_{g1} - 1/(\omega C_{g1})\} = 0$$

As can be seen from the equation bracketed by j, the imaginary component of the impedance of the power transmission coil 81 and the imaginary component of the impedance of the capacitor 82 are in opposite directions. That is, the imaginary component of the impedance of the power transmission coil 81 is positive. On the other hand, the imaginary component of the impedance of the capacitor 82 is negative. In the resonance state, the imaginary component of the positive impedance of the power transmission coil 81 and the imaginary component of the negative impedance of the capacitor 82 cancel each other, resulting in a smaller imaginary component of the impedance of the power transmission unit 80. Then, at a specific angular frequency $\omega$, the imaginary component of the impedance of the power transmission unit 80 from the power supply side becomes zero. The capacitance $C_{g1}$ of the capacitor 82 for which the power transmission unit 80 is in a resonance state by itself and the imaginary component of the impedance becomes zero is Cg1 = 1/(ω2Lg1)

The current $I_1$ flowing in the power transmission unit 80 at this time is extreme and $I_1 = V_1/r_1$.

Similarly, in the power receiving unit 280, the capacitance $C_1$ of the capacitor 282 for which the power receiving unit 280is in a resonance state by itself and the imaginary component of impedance becomes zero is $C_1 = 1/(\omega^2 L_v)$.

As the small mobile body 200 moves and the power receiving coil 281 of the power receiving unit 280 approaches the power transmission coil 81, the power transmission coil 81 and the power receiving coil 281 couple, and the inductance of the power transmission coil 81 changes. If a mutual inductance at coupling is Lm, the impedance $Z_1$ of the power transmission unit 80 is $Z_1 = \{r_1 + j\omega L_m + 1/(j\omega C_{g1})\}$. If the capacitance $C_{g1}$ of capacitor 82 is set so that $j\omega L_m + 1/(j\omega C_{g1})$ approaches zero, resonance can be maintained. Note that k shown in Fig. 3 is a coupling coefficient. The following relationship exists between the coupling coefficient k and the mutual inductance $L_m$.

$$L_m = k \cdot \{(L_{g1} \cdot Lv)^{1/2}\}$$

The coupling coefficient k is determined by the relative position of the power transmission coil 81 and the power receiving coil 281, and the larger the area of overlap between the power transmission coil 81 and the power receiving coil 281, the larger the coupling coefficient k. In other words, as the overlapping area of the power transmission coil 81 and the power receiving coil 281 increases, the coupling coefficient k also increases, and the magnitude of the mutual inductance $L_m$ also increases.

When the power transmission coil 81 and the power receiving coil 281 are coupled and in resonance state, if the output voltage of the AC power supply unit 20 is $V_1$, the current $I_1$ of the power transmission unit 80 is indicated by the following equation.

$$I_1 = R_L V_1 / [(\omega L_m)^2]$$

Figs. 4A, 4B, and 4C are explanatory diagrams showing examples of configurations for changing the capacitance of the capacitor 82. In the example shown in Fig. 4A, the capacitor 82 has two capacitors 82a and 82b connected in parallel, and a switch 83, which is a capacitance modifier, is connected in series to the capacitor 82b. A switching control unit 85 acquires the voltage $V_{81}$ at both ends of the power transmission coil 81 using a voltage sensor 84 and drives the switch 83 to turn it on and off according to the value of the voltage $V_{81}$. When the switch 83 is turned on, the two capacitors 82a and 82b are connected in parallel, so the capacitance of the capacitor 82 is larger. On the other hand, when the switch 83 is turned off, only the capacitor 82a is connected, so the capacitance of the capacitor 82 is only that of the capacitor 82a and is smaller than when the switch 83 is turned on. A capacitance ratio of the capacitor 82 when the switch 83 is turned on and off is, for example, about 10 times greater, and more preferably about 100 times greater. To achieve the capacitance ratio of about 10 or even 100 times, for example, the capacitance of the capacitor 82b should be about 9 or more times the capacitance of the capacitor 82a, more preferably about 99 times or more. Note that the capacitances of the two capacitors 82a and 82b may be set so that the power transmission unit 80 resonances when the switch 83 is turned on, or so that the power transmission unit 80 resonances when the switch 83 is turned off, the capacitances of the two capacitors 82a and 82b may be set. In addition, as shown in Fig. 4B, the switch 83a may be used to switch which of the two capacitors 82a or 82b to be connected. Further, as shown in Fig. 4C, two capacitors 82a and 82b may be connected in series, wiring may be provided to pass the capacitor 82b, and the switch 83c may be provided on the wiring passing the capacitor 82b. In this case, when the switch 83c is turned on, only the capacitor 82a is connected. On the other hand, when switch 83c is turned off, the capacitors 82a and 82b are connected in series, and the capacitance of the capacitor 82 is smaller than when the switch 83c is turned on.

Next, a case of mutual resonance in Fig. 3 will be considered. Mutual resonance means that when the power receiving coil 281 of the power receiving unit 280 approaches the power transmission coil 81, and the power transmission coil 81 and the power receiving coil 281 are coupled, they are in resonance. Whether the resonance is a single resonance or mutual resonance is determined by the inductance of the power transmission coil 81 and the capacitance of the capacitor 82.

In mutual resonance, because of the added effect of the mutual inductance Lm of the power transmission coil 81 and the power receiving coil 281, the impedance Z1 of the power transmission unit 80 is expressed by the following equation.

$$Z_1 = \{r_1 + j\omega L_{g1} + j\omega L_m + 1/(j\omega C_{g1})\}.$$

In the resonance state, since the equation is $j\omega L_{g1}+j\omega L_m+1/(j\omega C_{g1}) = 0$ or $j\{\omega L_{g1}+\omega L_m-1/(\omega C_{g1})\}= 0$, $C_{g1} = 1/\{\omega^2 (L_{g1}+L_m)\}$. Similarly, when the power receiving unit 280 is in the resonance state, $C_v = 1/\{\omega^2 (L_v + L_m)\}$.

The current I1 flowing through the power transmission unit 80 in the resonance state is $I_1 = [1/R_L + j\{(C_{g1}(L_{g1} +L_m)\}^{1/2}/L_m)]^{1/2}V_1$.

Note that if the power receiving coil 281 of the power receiving unit 280 is not in the vicinity of the power transmission coil 81, and the power transmission coil 81 and the power receiving coil 281 are not coupled, the power transmission unit 80 will not be in resonance and the current $I_1$ through the power transmission unit 80 will be $I_1 = V_1/[r_1^2 + \{\omega L_{g1}-1/(\omega C_{g1})\}^2]^{1/2}$. Here, since when the power transmission unit 80 is not in resonance, $\omega L_{g1}-1/(\omega C_{g1})$ is not zero, the current $I_1$ through the power transmission unit 80 is reduced compared to the resonance state.

Fig. 5 is an explanatory diagram showing a schematic configuration of a power transmission system 100 having a plurality of transmission units 80 and a small mobile body 200. The power transmission system 100 has an AC power source 10, an AC power supply unit 20, and the plurality of power transmission units 80. In Fig. 5, the power transmission units 80 are shown as transmission units 80a, 80b, and 80c. When the power transmission units 80 are distinguished, they are referred to as power transmission units 80a, 80b, and 80c, and when there is no need to distinguish between the transmission units, 80 they are referred to as "transmission unit 80". The AC power supply unit 20 is a device that generates AC voltage and supplies AC voltage to the power transmission unit 80. The AC power supply unit 20 has a power factor correction circuit 30, an inverter 40, and a filter 50. The power factor correction circuit 30 is a circuit that suppresses harmonic currents generated in the input current supplied from the AC power source 10 and brings the power factor close to 1. The inverter 40 converts DC voltage to AC at a predetermined frequency, for example, 85 kHz. he filter 50 has an L-type filter consisting of a coil 51 and a capacitor 52, and an L-type filter consisting of a coil 53 and a capacitor 54, both the L-type filters are connected in series. A plurality of power transmission units ..., 80a, 80b, 80c ... are connected in parallel to the AC power supply unit 20 as the power transmission units 80. The power transmission unit 80a has a power transmission coil 81a and a capacitor 82a connected in series. The power transmission unit 80b similarly has a power transmission coil 81b and a capacitor 82b connected in series. Other power transmission units, such as 80c, are similarly have power transmission coils and capacitors connected in series. Note that the power transmission coil 81 is also referred to as "transmission coil 81" when there is no need to distinguish between the power transmission coils 81a, 81b, etc.

The small mobile body 200 has a power receiving unit 280, an AC power supply unit 220, and a battery 210. The power receiving unit 280 has a power receiving coil 281 and a capacitor 282 connected in series.

When each of the power transmission coils 81 is positioned adjacent to each other as shown in Fig. 5, the power transmission coil 81a not only couples with the power receiving coil 281, but also with the adjacent power transmission coil 81b. In addition, the power transmission coil 81b not only couples with the power receiving coil 281, but also with the adjacent power transmission coils 81a and 81c. The power transmission coil 81c is a power transmission coil in the power transmission unit 80c, but is not shown in Fig. 5 for convenience of illustration. A coupling coefficient between the power transmission coil 81a and the power receiving coil 281 is kg1v, a coupling coefficient between the power transmission coil 81b and the power receiving coil 281 is $k_{g2v}$, and a coupling coefficient between the power transmission coil 81a and the adjacent power transmission coil 81b is $k_{g1g2}$. The coupling coefficient $k_{g1g2}$, is determined by the relative position of the power transmission coils 81a and 81b, for example, relative distance. However, since the power transmission coils 81a and 81b are positioned and fixed in place, and the relative positions of the power transmission coils 81a and 81b do not change, the coupling coefficient $k_{g1g2}$, is a constant value. Here, the relative distance is indicated, for example, by the distance between the centers of two coils. n the other hand, the coupling coefficient $k_{g1v}$ between the power transmission coil 81a and the power receiving coil 281 varies depending on the relative positions of the power transmission coil 81a and the power receiving coil 281. Therefore, the mutual inductance $L_{ma}$ between the power transmission coil 81a and the power receiving coil 281 also varies. As a result, the impedance of the power transmission unit 80a also varies due to the relative positions of the power transmission coil 81a and the power receiving coil 281, and the voltage $V_{81a}$ at both ends of the power transmission coil 81a also varies. Similarly, the mutual inductance $L_{mb}$ between the power transmission coil 81b and the power receiving coil 281 varies due the relative position of the power transmission coil 81b and the power receiving coil 281, which also varies the impedance of the power transmission unit 80b and the voltage $V_{81b}$ at both ends of the power transmission coil 81b.

Fig. 6 is an explanatory diagram showing the relationship between center positions of the power transmitting coils 81a, 81b, 81c and the power receiving coil 281 and the voltage of the transmitting coils 81a, 81b, 81c when the mobile body moves to the right. The voltages $V_{81a}$, $V_{81b}$, and $V_{81c}$ in the upper graph show the voltages at both ends of the power transmission coils with the power transmission coils 81a, 81b, and 81c in resonance, respectively. The voltage $Vn_{81b}$ in the lower graph shows the voltage at both ends of the power transmission coil 81b when the power transmission coil 81a is in resonance with the power receiving coil 281, but the power transmission coil 81b is not in resonance with the power receiving coil 281, i.e., non-resonance state. Similarly, the voltage $Vn_{81c}$ shows the voltage at both ends of the power transmission coil 81c when the power transmission coil 81b is in resonance with the power receiving coil 281, but the power transmission coil 81c is not in resonance with the power receiving coil 281, i.e., non-resonance state. In the example shown in Fig. 6, the small mobile body 200 moves in the right direction in the figure. The center P281 of the power receiving coil 281 of the small mobile body 200 moves in the right direction in the figure, as ... P3, P4, ... P8 .... The power transmission coils 81a, 81b, and 81c are aligned in sequence along the direction of movement of the small mobile body 200, i.e., the direction of movement of the power receiving coil 281.

In the resonance state, the voltages $V_{81a}$, $V_{81b}$, and $V_{81c}$ are the greatest when the power receiving coil 281 is directly above the center of the corresponding transmission coil, respectively, and decrease as the coil is displaced from the center of the corresponding transmission coil. On the other hand, the voltage $Vn_{81b}$ is shown by the following equation.

$$Vn_{81b} = (k_{g1v} \times k_{g2v} + k_{g1g2}) \times V_{81a} + Z_2 \times I_2$$

In the above equation, $k_{g1v}$ is the coupling coefficient between the power transmission coil 81a and the power receiving coil 281, $k_{g2v}$ is the coupling coefficient between the power transmission coil 81b and the power receiving coil 281, and $k_{g1g2}$ is the coupling coefficient between the power transmission coil 81a and the power receiving coil 81b. $Z_2$ is the impedance of the power transmission unit 80b including the power transmission coil 81b, and $I_2$ is the current flowing in the power transmission coil 81b. In the above equation, the coupling coefficient $K_{g1g2}$ is determined by the position of the power transmission coils 81a and 81b, and is a constant value regardless of the position of the power receiving coil 281. In contrast, the coupling coefficients $k_{g1v}$, $k_{g2v}$, and voltage $V_{81a}$ vary with the position of the power receiving coil 281. Note that since the power transmission coil 81b is not resonance, the current $I_2$ is small, and the second term in the above equation, $Z_2 \times I_2$, is smaller than the first term.

Fig. 7 is an explanatory diagram showing the relationship between the position of the power receiving coil 281 and the coupling coefficients $k_{g1v}$ and $k_{g2v}$ between the power transmission coils 81a and 81b and the power receiving coil 281. Here, the power transmission coils 81a and 81b are arranged so that the gap between the power transmission coils 81a and 81b is as small as possible, and the size of the power receiving coil 281 is large enough to span a plurality of power transmission coils, for example, the size of the power receiving coil 281 is large enough to span both of the power transmission coils 81a and 81b. The coupling coefficients $k_{g1v}$ and $k_{g2v}$ are positive maxima when the center P281 of the power receiving coil 281 is directly above the centers P81a and P81b of the transmitting coils 81a and 81b, respectively. The coupling coefficients $k_{g1v}$ and $k_{g2v}$ become smaller when the power transmission coils 81a and 81b are displaced from directly above the centers P81a and P81b. Note that if the center P281 of the power receiving coil 281 is greatly displaced from above the centers P81a and P81b of the transmitting coils 81a and 81b, the value may become negative. However, in the present embodiment, the power transmission coils 81a and 81b of the plurality of transmission units 80a and 80b are arranged so that the coupling coefficient between the power transmission coil 81 of at least one of the plurality of transmission units 80a and 80b and the power receiving coil 281, that is, at least one of the coupling coefficients $k_{g1v}$ and $k_{g2v}$, is greater than zero, that is, positive.

Fig. 8 is an explanatory diagram showing the relationship between the position of the power receiving coil 281 and the coupling coefficient $k_{g1g2}$ between the two transmission coils 81a and 81b. In the above explanation, since the coupling coefficient $k_{g1g2}$ is determined by the position of the power transmission coils 81a and 81b, it becomes a constant value and does not change. However, the two power transmission coils 81a and 81b may be coupled through the power receiving coil 281. Therefore, the coupling coefficient $k_{g1g2}$ is not a constant value and may vary slightly depending on the position of the power receiving coil 281.

Next, $k_{g1v} \times k_{g2v}$ in the above equation will be considered. When the center P281 of the power receiving coil 281 is directly above the middle position P3 of the power transmitting coil 81a and the transmitting coil 81b, $k_{g1v} \times k_{g2v}$ in the above equation is the largest. Therefore, the voltage $Vn_{81b}$ in the non-resonance state is greatest when the center P281 of the power receiving coil 281 is directly above the middle position P3 of the power transmitting coil 81a and the power transmitting coil 81b, and decreases as it shifts from the middle position P3 of the transmitting coil 81a and 81b. The present embodiment is explained using the above relationship.

As shown in Fig. 6, it is assumed that the small mobile body 200 moves to the right and the power receiving coil 281 also moves to the right. It is assumed that the power receiving coil 281 is between the power transmission coils 81a and 81b, and that the power transmission unit 80a including the power transmission coil 81a is in resonance state and the power transmission unit 80b including the power transmission coil 81b is in non-resonance state. The voltage $Vn_{81b}$ of the power transmission coil 81b when the power transmission unit 80b is in a non-resonance state is greatest when the power receiving coil 281 is in the middle position P3 between the power transmission coil 81a and the power transmission coil 81b. When the power receiving coil 281 moves from the middle position P3 in Fig. 6 to, for example, the right, the voltage $Vn_{81b}$ of the power transmitting coil 81b becomes smaller. When the power receiving coil 281 reaches the position P4, the voltage $Vn_{81b}$ of the power transmission coil 81b becomes the threshold value Vnth. The switching control unit 85b switches the power transmission unit 80b including the power transmission coil 81b to the resonance state if the voltage $Vn_{81b}$ of the power transmission coil 81b changes from above the threshold value Vnth to below the threshold value Vnth when the power transmission unit 80a is in the resonance state. The voltage $V_{81a}$ of the power transmission coil 81a is below the threshold value Vth when the power receiving coil 281 reaches the position P5. The switching control unit 85a switches the power transmission unit 80a including the power transmission coil 81a to the non-resonance state when the voltage $V_{81a}$ of the power transmission coil 81a is below the threshold value Vth.

When the power transmission unit 80c is in a non-resonance state, the voltage $Vn_{81c}$ of the power transmission coil 81c is greatest when the power receiving coil 281 is at the middle position P6 between the power transmission coil 81b and the power transmission coil 81c. As the power receiving coil 281 moves from the middle position P6 in Fig. 6 to, for example, the right, the voltage $Vn_{81c}$ of the transmitting coil 81c becomes smaller. When the power receiving coil 281 reaches the position P7, the voltage $Vn_{81c}$ of the power transmission coil 81c becomes the threshold Vnth. The switching control unit 85c switches the power transmission unit 80c including the power transmission coil 81c to the resonance state if the voltage Vn81c of the power transmission coil 81c changes from above the threshold value Vnth to below the threshold value Vnth when the power transmission unit 80b is in the resonance state. The voltage $V_{81b}$ of the power transmission coil 81b is below the threshold value Vth when the power receiving coil 281 reaches the position P8. The switching control unit 85b switches the power transmission unit 80b including the power transmission coil 81b to the non-resonance state when the voltage $V_{81b}$ of the power transmission coil 81b is below the threshold value Vth.

The same is true when the small mobile body 200 moves to the left and the power receiving coil 281 also moves to the left. In this case, the power transmission unit 80a including the power transmission coil 81a is in resonance state and the power transmission unit 80b including the power transmission coil 81b is in non-resonance state. The voltage $Vn_{81b}$ of the power transmission coil 81b when the power transmission unit 80b is in the non-resonance state is greatest when the power receiving coil 281 is at the middle position P6 between the power transmission coil 81c and the power transmission coil 81b. When the power receiving coil 281 moves from the middle position P6 in Fig. 6B to, for example, the left, the voltage $Vn_{81b}$ of the power transmitting coil 81b becomes smaller. In other words, if the small mobile body 200 moves to the left, the graph of the voltage $Vn_{81c}$ shown in Fig. 6 becomes the graph of the voltage $Vn_{81b}$ of the power transmission coil 81b, and the graph of the voltage $Vn_{81b}$ becomes the graph of the voltage $Vn_{81a}$ of the power transmission coil 81a.

Fig. 9 shows a side view of the two power transmission coils 81a, 81b and the power receiving coil 281, and Fig. 10 shows a plan view of the two power transmission coils 81a, 81b and the power receiving coil 281. The two transmission coils 81a and 81b have substantially square shapes with one side length of a and are spaced $\Delta x$ apart. The distance between the centers of the power transmission coils 81a and 81b is $a + \Delta x$. The power receiving coil 281 has a substantially square shape with one side length of 2a and moves $\Delta z$ higher from the two transmission coils 81a and 81b.

Fig. 11 shows the relationship between the distance $\Delta x$ between the two transmission coils 81a and 81b and the coupling coefficient $k_{g1g2}$ of the two transmission coils 81a and 81b. Fig. 12 shows the relationship between the distance $\Delta z$ between the power transmission coil 81a and the power receiving coil 281 and the coupling coefficient $k_{1v}$ between the power transmission coil 81a and the power receiving coil 281. Note that Fig. 12 shows a case where the center P281 of the power receiving coil 281 is positioned at P3, halfway between the two power transmission coils 81a and 81b.

The coupling coefficient $k_{g1g2}$ of the two transmission coils 81a and 81b becomes smaller as the distance $\Delta x$ between the two transmission coils 81a and 81b becomes larger, and it becomes larger as the distance $\Delta x$ becomes smaller. The coupling coefficient $k_{1v}$ between the power transmission coil 81a and the power receiving coil 281 becomes smaller as the distance $\Delta z$ between the power transmission coil 81a and the power receiving coil 281 becomes larger, and it becomes larger as the distance $\Delta z$ becomes smaller. Therefore, these relationships can be used to obtain the desired coupling coefficients $k_{g1g2}$ and $k_1v$. The values of the distance $\Delta x$ between the two transmission coils 81a and 81b and the distance $\Delta z$ in the z-direction between the power transmission coil 81a and the power receiving coil 281 can be determined. Note that as can be seen from Figs. 11 and 12, the coupling coefficient $k_{g1g2}$ of the power transmission coils 81a and 81b is smaller than the coupling coefficient $k_{1v}$ between the power transmission coil 81a and the power receiving coil 281. This is because the magnetic flux through the power transmission coil 81a is directed in the $\pm z$ direction, the magnetic flux of the power transmission coil 81a can easily pass through to the power receiving coil 281, which is in the +z direction. On the other hand, since the power transmission coil 81b is located in the +x direction and has the same height in the z direction as the power transmission coil 81a, it is difficult for the magnetic flux passing through the power transmission coil 81a to pass through the power transmission coil 81b.

Fig. 13 is an explanatory diagram showing a case of supplying power using a single transmission coil 81a. The coupling coefficient $k_{g1g2}$ between the two power transmission coils 81a and 81b is determined from the distance $\Delta x$ between the two power transmission coils 81a and 81b, as described above. Once the distance $\Delta x$ between the two power transmission coils 81a and 81b is determined, the coupling coefficient $k_{g1g2}$ between the two power transmission coils 81a and 81b becomes a constant value. On the other hand, the coupling coefficient $k_{g1v}$ between the power transmission coil 81a and the power receiving coil 281 varies depending on the position of the power receiving coil 281 relative to the power transmission coil 81a in the x and y directions, in addition to the distance $\Delta z$ in the z direction between the power transmission coil 81a and the power receiving coil 281. When the distance $\Delta z$ between the power transmission coil 81a and the power receiving coil 281 in the z direction is constant, the coupling coefficient $k_{g1v}$ is maximal when the center of the power transmission coil 81a coincides with the center of the power receiving coil 281, and the more the center of the power receiving coil 281 shifts from the center of the power transmission coil 81a, the smaller the coupling coefficient $k_{g1v}$. When supplying power, the coupling coefficient $k_{g1v}$ and the coupling coefficient $k_{g1g2}$ satisfy the following equation.

$$k_{g1g2} < k_{g1v}$$

In the present embodiment, if the mutual inductance of the power transmission coil 81a and the power receiving coil 281 is $L_{g1v}$, and the current flowing in the power receiving coil 281 is Iv, the voltage V81a of the power transmission coil 81a is shown by the following equation.

$$V_{81a} = Z_1 I_1 + j\omega L_{g1v} I_v$$

According to the present embodiment, when power is supplied, the coupling coefficient $_{kg1v}$ between the power transmission coil 81a and the power receiving coil 281 is greater than the coupling coefficient $k_{g1g2}$ between the two transmission coils 81a and 81b. The switching control unit 85a supplies power from the power transmission coil 81a to the power receiving coil 281 by setting the state of the first power transmission unit 80a to resonance state in the range where the coupling coefficient $k_{g1v}$ is greater than the coupling coefficient $k_{g1g}2$. The switching control unit 85a can stop supplying power from the power transmission coil 81a to the power receiving coil 281 by setting the state of the first power transmission unit 80a to a non-resonance state in the range where the coupling coefficient $k_{g1v}$ is less than the coupling coefficient $k_{g1g2}$.

Since the strength of the magnetic flux penetrating the power transmission coil 81a and the power receiving coil 281 corresponds to the coupling coefficient $k_{g1v}$, the switching control unit 85a can determine the strength of the magnetic flux penetrating the power transmission coil 81a and the power receiving coil 281 using the voltage $V_{81a}$ of the power transmission coil 81a. In other words, the threshold value is set as the magnitude that exceeds the magnetic flux generated in the first power transmission coil 81a by the coupling between the first power transmission coil 81a and the second power transmission coil 81b, and the switching control unit 85a switches the state of the first power transmission unit 80a, which is one of the power transmission units, to the resonance state when the magnitude of the magnetic flux generated in the first power transmission coil 81a of the first power transmission unit 80a exceeds the predefined threshold value and switches to the non-resonance state when it is smaller than the threshold value. As a result, the threshold Vth for determining whether the state of the first power transmission unit 80a is resonance or non-resonance can be clarified. This threshold is set, for example, by the relative distance between the first power transmission coil 81A and the second power transmission coil 81B. The relative distance between the first power transmission coil 81A and the second power transmission coil 81B is the center-to-center distance between the center of the first power transmission coil 81A and the center of the second power transmission coil 81B.

The switching control unit 85b switches the power transmission unit 80b including the power transmission coil 81b to the resonance state using the voltage $Vn_{81b}$ of the power transmission coil 81b in the non-resonance state. The switching control unit 85a can switch the power transmission unit 80a including the power transmission coil 81a to the non-resonance state using the voltage $Vn_{81a}$ of the power transmission coil 81a in the resonance state.

Second Embodiment:

The first embodiment uses one power transmission coil 81 to supply power, whereas the second embodiment differs in that it uses a plurality of power transmission coils 81 to supply power simultaneously. Fig. 14 is an explanatory diagram showing a case of supplying power using four power transmission coils 81a, 81b, 81c, and 81d. The number of simultaneous power supplying is determined, for example, by an area ratio of the power transmission coils 81a, 81b, 81c, 81d to the area of the power receiving coil 281. For example, if the power transmission coils 81a, 81b, 81c, and 81d have substantially square shapes of length a on each side, and the power receiving coil 281 has a substantially square shape of side length 2a, the number of simultaneous power supplying coil is four, because the power receiving coil 281 has an area four times larger than that of the power transmission coil 81a. An area means, in each coil, the sum of the area inside the coil wiring portion and the area inside the coil wiring. Note that two or three power transmission coils, which are fewer than four, may be used to supply power simultaneously.

The power transmission coil to be switched is called a first power transmission coil 81a, and the power transmission coils of the second power transmission units 80b, 80c, and 80d, which are adjacent to the first power transmission coil 81a and are supplying power, are called second power transmission coils 81b, 81c, and 81d. The first power transmission coil 81a not only couples with the power receiving coil 281, but also with the second power transmission coils 81b, 81c and 81d. The coupling coefficient between the first power transmission coil 81a and the power receiving coil 281 is $k_{g1v}$, and the coupling coefficients between the first power transmission coil 81a and the second power transmission coils 81b, 81c and 81d are $k_{g1g2}$, $k_{g1g3}$ and $k_{g1g4}$ respectively. When supplying power, the coupling coefficients $k_{g1v}$, $k_{g1g2}$, $k_{g1g3}$, and $k_{g1g4}$ satisfy the following equations.

$$k_{g1g2} + k_{g1g3} + k_{g1g4} < k_{g1v}$$

In the present embodiment, the coupling relationship between the first power transmission coil 81a and the power receiving coil 281 is such that the coupling coefficient $k_{g1v}$ between the first power transmission coil 81a and the second power transmission coils 81b, 81c, 81d is greater than the sum of the coupling coefficients $k_{g1g2}$, $k_{g1g3}$ and $k_{g1g4}$. Therefore, the switching control unit 85a makes the state of the first power transmission unit 80a resonance in the range where the coupling coefficient $k_{g1v}$ is greater than the sum of the coupling coefficients $k_{g1g2}$, $k_{g1g3}$, and $k_{g1g4}$, and makes the state of the first power transmission unit 80a non-resonance in the range where the coupling coefficient $k_{g1v}$ is less than the sum of the coupling coefficients $k_{g1g2}$, $k_{g1g3}$, and $k_{g1g4}$. As a result, the threshold Vth for determining whether the state of the first power transmission unit 80a is resonance or non-resonance can be clarified. In addition, the first power transmission coil 81a can be switched in sequence to supply the power while maintaining a greater coupling between the first power transmission coil 81a and the power receiving coil 281 than between the first power transmission coil 81a and the second power transmission coils 81b to 81d.

The voltage $V_{81a}$ of the first power transmission coil 81a is expressed by the following equation using $I_1$ for the current flowing in the first power transmission coil 81a, $I_2$, $I_3$, and $I_4$ for the current flowing in the power second transmission coils 81b, 81c, and 81d, impedance $Z_1$ of the first power transmission unit 80a, and mutual inductances $L_{g1g2}$, $L_{g1g3}$, and $L_{g1g4}$ between the first power transmission unit 80a and the second power transmission coils 81b, 81c, and 81d.

$$V_{81a} = Z_1 I_1 + j\omega (L_{g1g2} I_2 + L_{g1g3} I_3 + L_{g1g4} I_4)$$

The minimum value $Vmin_{81a}$ of the voltage $V_{81a}$ of the first power transmission coil 81a occurs when the first power transmission coil 81a is coupled to the second power transmission coils 81b, 81c, 81d, but not to the power receiving coil 281.

Fig. 15 compares the voltage $V_{81a}$ of the first power transmission coil 81a in a case of one supplying coil and four supplying coils. If the minimum value $Vmin_{81a}$ of the voltage $V_{81a}$ of the first power transmission coil 81a when supplying power using four power transmission coils 81a to 81d is smaller than the maximum value $Vmax_{81a}$ of the voltage $V_{81a}$ of the first power transmission coil 81a when supplying power using one power transmission coil 81a, the voltage $V_{81a}$ of the first power transmission coil 81a will exceed the maximum value $Vmax_{81a}$ of the one supplying case somewhere as the center of the power receiving coil 281 moves. Therefore, between the minimum value $Vmin_{81a}$ and the maximum value $Vmax_{81a}$, there is a threshold Vth that switches the power transmission coil 81a between supplying and not supplying, i.e., resonance and non-resonance states. Thus, the switching control unit 85a can switch between the resonance and non-resonance states of the first power transmission coil 81a while maintaining a greater coupling between the first power transmission coil 81a and the power receiving coil 281 than between the first power transmission coil 81a and the second power transmission coils 81b to 81d.

In addition, in the present embodiment, as shown in Fig. 15, the sum of the product $I_1$ of the impedance due to the mutual inductance of the first power transmission coil 81a and the power receiving coil 281 and the current in the first power transmission coil 81a, the impedance due to the mutual inductance between the first power transmission coil 81a and the second power transmission coils 81b, 81c, and 81d, and the currents $I_2$, $I_3$, and $I_4$ flowing in the second power transmission coils 81b, 81c, and 81d is less than the product of the impedance due to the mutual inductance of the first power transmission coil 81a and the current $I_v$ flowing in the power receiving coil 281. Therefore, the switching control unit 85a can switch between the resonance and non-resonance states of the first power transmission unit 80a without being affected by changes in the respective currents $I_1$, $I_2$, $I_3$, and $I_v$ due to misalignment.

The above explanation describes a case in which four power transmission coils 81a-81d are used to supply four power transmission coils, but the number of power transmission coils may be other than four. For example, if the power transmission coil 81a is a hexagon with one side a, and the power transmission coils are arranged so that they are lined up in a honeycomb shape with six hexagonal power transmission coils 81b to 81g with one side a on each side of the power transmission coil 81a, seven coils are supplied. The voltage $V_{81a}$ of the power transmission coil 81a is shown by the following equation.

$$V_{81a} = Z_1 I_1 + j\omega L_{g1g2} I_2 + j\omega L_{g1g3} I_3 + j\omega L_{g1g4} I_4 + j\omega L_{g1g5} I_5 + j\omega L_{g1g6} I_6 + j\omega L_{g1g7} I_7$$

When four power transmission coils 81 are used, the shape of power transmission coils 81 is square, and when seven power transmission coils 81 are used, the shape of power transmission coils 81 is regular hexagonal, so that all power transmission coils 81 are the same shape and can be arranged without gaps.

In the present embodiment, as described above, the plurality of power transmission units are disposed so that the coupling coefficient between the power transmission coil 81 of at least one of the plurality of power transmission units 80a and 80b, and the power receiving coil 281, that is, at least one of the coupling coefficients $k_{g1v}$ and $k_{g2v}$, is zero or greater, that is, positive. Therefore, the switching control unit 85a places the state of the power transmission unit 80a in resonance when the power receiving coil 281 exists above the power transmission coil 81a and the coupling coefficient $k_{g1v}$ is positive, thus reducing the leakage of the magnetic flux of the power transmission coil 81a to other than the power receiving coil 281. The same is true for the magnetic flux of the power transmission coil 81b.

Third Embodiment:

Fig. 16 is an explanatory diagram showing a schematic configuration of a power transmission unit 100 having a plurality of power transmission units 80 and a small mobile body 200 in the third embodiment. The configuration of the third embodiment is almost the same as that of the first embodiment, but differs from the first embodiment in the following points.

(1) In the first embodiment, the state of the power transmission unit 80a is switched to the resonance state or the non-resonance state, whereas in the third embodiment, the state of the power transmission unit 80a is switched to the power transmission state or the non-power transmission state.

(2) In the first embodiment, the threshold value when the switching control unit 85 switches the state of the power transmission unit 80a between the resonance state and the non-resonance state is the magnetic flux generated in the first power transmission coil 81a due to coupling with the adjacent power transmission coil, however, in the third embodiment, it is defined by the magnitude of the magnetic flux generated in the first power transmission coil 81a due to coupling with the magnetically coupled power transmission coil 81a.

First, the power transmission state and the non-power transmission state are explained. The non-power transmission state means a state in which the magnetic flux generated by the first power transmission coil 81a is below the standard value for human exposure that does not affect humans, as specified by the International Commission on Non-Ionizing Radiation Protection (ICNIRP), for example. In this state, sufficient power cannot be transmitted from the first power transmission coil 81a to the power receiving coil 282. The power transmission state means a state in which sufficient magnetic flux can be generated in the first power transmission coil 81a to supply sufficient power to the power receiving coil 282. Since the magnetic flux in this power transmission state can affect people, the power transmission system 100 is used, for example, in unmanned factories. In a manned factory, the effect of magnetic flux on people may be suppressed by having people work in magnetically shielded areas.

The difference between switching the state of the power transmission unit 80a to a resonance state and switching it to the power transmission state is explained below. Switching the state of the power transmission unit 80a to the resonance state means changing the capacitance $C_{g1}$ of a capacitor 82 so that an imaginary component $j\omega L_m + 1/(j\omega C_{g1})$ of the following equation for the impedance of the power transmission unit 80a becomes zero.

$$Z_1 = \{r_1 + j\omega L_m + 1/(j\omega C_{g1})\}$$

In contrast, switching the state of the power transmission unit 80a to the power transmission state means changing the capacitance $C_{g1}$ of the capacitor 82 so that the magnitude of the imaginary component $j\omega L_m + 1/(j\omega C_{g1})$ in the above equation is less than a predetermined magnitude. Therefore, whether the power transmission unit 80a is switched to the resonance state or the power transmission state, the capacitance $C_{g1}$ of the capacitor 82 is changed in the same way. However, the range of capacitance $C_{g1}$ of capacitor 82 is wider in the power transmission state than in the resonance state, and the relationship is that if the state of the power transmission unit 80a is resonance, it will be in the power transmission state, but not necessarily in the resonance state.

Next, the difference between adjacency and coupling is explained. The reach of the magnetic flux emitted by the power transmission coil 81a is infinite. Therefore, the power transmission coil 81a magnetically couples with the adjacent power transmission coil 81b as well as with the distant power transmission coil 81c with the adjacent power transmission coil 81b in between, as shown in Fig. 16. Thus, the relationship is that adjacent power transmission coils are magnetically coupled, but even magnetically coupled power transmission coils are not necessarily adjacent power transmission coils.

In the third embodiment, the threshold value for when the switching control unit 85 switches the state of the power transmission unit 80a to the power transmission or non-power transmission state is set as a magnitude that exceeds the magnetic flux generated in the first power transmission coil 81a by the coupling between the first power transmission coil 81a and the second power transmission coil 81b in at least one or more second power transmission units 80b that magnetically couple to the first power transmission coil 81a. Note that the coupling coefficient $k_{g1g3}$ between the power transmission coil 81a and the power transmission coil 81c is very much smaller than the coupling coefficient $k_{g1g2}$ between the power transmission coil 81a and the power transmission coil 81b. In other words, the coupling coefficient with the non-adjacent power transmission coil 81c is extremely smaller than the coupling coefficient with the adjacent power transmission coil 81b. Therefore, although the non-adjacent power transmission coil 81c is magnetically coupled to the power transmission coil 81a, the magnetic flux generated in the power transmission coil 81a due to coupling with the power transmission coil 81c is very small. Therefore, as in the third embodiment, it is preferable to set the threshold value as a magnitude that exceeds the magnetic flux generated in the first power transmission coil 81a by the coupling between the first power transmission coil 81a and the second power transmission coil 81b of at least one or more second power transmission units 80b that are magnetically coupled to the first power transmission coil 81a. However, for practical purposes, as in the first embodiment, it is acceptable to set the threshold value to a magnitude that exceeds the magnetic flux generated in the first power transmission coil 81a due to coupling with the adjacent power transmission coil 81b. The second power transmission coil may be the power transmission coil 81b, which does not include the power transmission coil 81c and is adjacent to the first power transmission coil 81a. This threshold is set, for example, by the relative distance between the first power transmission coil 81a and the second power transmission coil 81b. The relative distance between the first power transmission coil 81a and the second power transmission coil 81B is the center-to-center distance between the center of the first power transmission coil 81a and the center of the second power transmission coil 81b.

According to the third embodiment, the switching control unit 85a switches the state of the first power transmission unit 80a to the power transmission state when the magnitude of the magnetic flux generated in the first power transmission coil 81a of the first power transmission unit 80a, which is one of the power transmission units, exceeds a predetermined threshold value, and switches to the non-power transmission state when it is smaller than the threshold value, thus enabling more appropriate switching control between the power transmission and the non-power transmission. In addition, the threshold is set as a magnitude that exceeds the magnetic flux generated in the first power transmission coil 81a by the coupling of the first power transmission coil 81a and the second power transmission coil 81b of at least one or more second power transmission units 80b that are magnetically coupled to the first power transmission coil 81a, so that the first power transmission unit 80a can more accurately switch between the power transmission state and the non-power transmission state.

The threshold of the third embodiment may be used in switching between resonance and non-resonance states in the first embodiment, and the threshold of the first embodiment may be used in switching between the power transmission state and the non-power transmission state in the third embodiment.

Fourth Embodiment:

Fig. 17 shows a schematic circuit diagram of a power transmission unit 801 of a power transmission system 101 and a power receiving unit 280 of a small mobile body 200 in the fourth embodiment. In the fourth embodiment, the power transmission unit 801 uses a split-coil resonance system in which the power transmission coil is divided into a power transmission coil 81 and a power transmission coil 81s, and a capacitor is also divided into capacitors 82 and 82s. The power transmission coil 81 and the capacitor 82 are connected in series, and the power transmission coil 81s and the capacitor 82s are connected in series. Note that the circuit configuration of the small mobile body 200 is the same in both the first and fourth embodiments.

In the fourth embodiment, an inductance of the power transmission coil 81 is $L_{g1}$, an inductance of the power transmission coil 81s is $L_s$, a capacitance of capacitor 82 is $C_{g1}$, a capacitance of capacitor 82s is $C_s$, an inductance of a power receiving coil 282 is $L_v$, a capacitance of a capacitor 282 is $C_v$, a coupling coefficient between the power transmission coil 81s and the power transmission coil 81 is $k_{1s}$, a coupling coefficient between the power transmission coil 81 and a power receiving coil 281 is $k_{12}$, and a coupling coefficient between the power transmission coil 81s and the power receiving coil 281 is $ks_2$.

The capacitance $C_{g1}$ of the capacitor 82 and the capacitance $C_s$ of the capacitor 82s for the power transmission unit 801 to be in resonance alone are the same as in the first embodiment, respectively, and are as follows.

$$C_{g1} = 1/(\omega^2 L_{g1})$$

$$C_s = 1/(\omega^2 L_s)$$

In addition, the capacitance $C_v$ of the capacitor 282 for the power receiving circuit 280 to resonance becomes $C_v = 1/\{\omega^2 L_v\ (1\text{-}2k_{s2}k_{12}/k_{1s})\}$.

When the power transmission coils 81, 81s and the power receiving coil 281 are coupled and resonance, the current $I_1$ in the resonance state is shown below when the output voltage of the AC power supply unit 20 is $V_1$.

$$I_1 = (k_{s2}/k_{1s})^2\ (L_v/L_{1g})\ (V_1/R_L)$$

Next, a case in the fourth embodiment where the power receiving unit 280 is not in the vicinity of the power transmitting unit 801 and the power transmitting coils 81, 81s and the power receiving coil 281 are not coupled will be considered. If a parasitic resistance of the power transmission coil 81s is $r_s$ and a mutual inductance of the power transmission coil 81 and the power transmission coil 81s is $L_{sm}$, the current $I_0$ flowing in the power transmission coil 81 is shown as follows.

$$I_0 = \{r_s/(\omega L_{sm})^2\}\, V_1$$

The current $I_0$ when the power transmission coils 81, 81s and the power receiving coil 281 are not coupled is smaller than the current $I_1$ flowing in the power transmission coil 81 when the power transmission coils 81, $81_s$ and the power receiving coil 281 are resonance or coupled because resonance is broken and the impedance $Z_1$ is larger. As a result, it can be said that the magnetic flux generated by the power transmission coil 81 and passing through the power receiving coil 282 is larger in the resonance or coupled state.

According to the fourth embodiment, since the split-coil resonance system is used, when the power receiving coil 281 is closer to the power transmission coil 81, the current flowing through the power transmission coil 81 can be increased to increase the amount of magnetic flux transmitted through the power receiving coil 282, while when the power receiving coil 281 is further away from the power transmission coil 81, the current flowing through the power transmission coil 81 can be reduced.

Fifth Embodiment:

Fig. 18 is an explanatory diagram showing a power transmission system 100 for a small mobile body in the fifth embodiment. In the first embodiment, the power transmission system 100 transmits power to a single small mobile body 200, however, in the fifth embodiment, the power transmission system 100 transmits power to a plurality of small mobile bodies 200 and 200x.

Fig. 19 is an explanatory diagram showing the fifth embodiment of supplying power from one power transmission coil 81a to two small mobile bodies 200 and 200x. In Fig. 19, three power transmission coils 81a, 81b, 81x and two power receiving coils 281, 281x are shown. Inductances of the three power transmission coils 81a, 81b, and 81x are $L_{g1}$, $L_{g2}$, and $L_{gx}$, respectively. In addition, inductances of the power receiving coils 281 and 281x of the small mobile bodies 200 and 200x are $L_v$ and $L_{vx}$, respectively. A coupling coefficient between the power transmission coil 81a and the power transmission coil 81b is $k_{g1g2}$, and coupling coefficients between the power transmission coil 81a and the power receiving coils 281 and 281x are $k_{g1v1}$ and $k_{g1vx}$, respectively. In addition, a coupling coefficient between the power transmission coil 81a and the power receiving coil 281x via the power transmission coil 81x is $k_{g1gvx}$. When supplying power, the coupling coefficients $k_{g1v1}$, $k_{g1g2}$, $k_{g1vx}$, and $k_{g1gvx}$ satisfy the following equation.

$$k_{g1g2} + k_{g1gvx} + k_{g1vx} < k_{g1v1}$$

When supplying one small mobile body 200, the following equation is satisfied, as explained in the first embodiment, and comparing the two, when there are a plurality of small mobile bodies, $k_{g1gvx} + k_{g1vx}$ increases by the number of small mobile bodies 200x that are increased.

$$k_{g1g2} < k_{g1v}$$

In addition, assuming that a current in the power transmission coil 81a is $I_1$, a current in the power receiving coil 281 is $I_v$, a current in the power transmission coil 81x is $I_x$, and a current in the power receiving coil 281x is $I_{vx}$, the voltage $V_{81a}$ of the power transmission coil 81a is indicated by the following equation.

$$V_{81a} = Z_1 I_1 + j\omega L_{g1v} I_v + j\omega L_{gx} I_{gx} + j\omega L_{vx} I_{vx}$$

Similarly, compared to the case with one small mobile body, when there are a plurality of small mobile bodies, $j\omega L_{gx} I_{gx} + j\omega L_{vx} I_{vx}$ is increased by the number of small mobile bodies 200x that are increased.

In the present embodiment, when supplying power, the state of the first power transmission unit 80a is the power transmission state in the range where the coupling coefficient kg1v1 between the first power transmission coil 81a and the power receiving coil 281 is greater than the sum of the coupling coefficients $k_{g1g2}$, $k_{g1vx}$, and $k_{g1gvx}$, and the state of the first power transmission unit 80a is the non-power transmission state in the range where the coupling coefficient kg1v1 is less than the sum of the coupling coefficients $k_{g1g2}$, $k_{g1gvx}$, and $k_{g1vx}$.

In addition, since the strength of the magnetic flux penetrating the power transmission coil 81a and the power receiving coil 281 corresponds to the coupling coefficient $k_{g1v1}$ and also to the voltage $V_{81a}$ of the power transmission coil 81a, the switching control unit 85a can determine the strength of the magnetic flux penetrating the power transmission coil 81a and the power receiving coil 281 using the voltage $V_{81a}$ of the power transmission coil 81a. In other words, the switching control unit 85a switches the state of the first power transmission unit 80a to the resonance state when the magnitude of the magnetic flux generated in the first power transmission coil 81a of the first power transmission unit 80a, which is one of the power transmission units, is greater than a predetermined threshold value, and switches to the non-resonance state when it is less than the threshold value. As a result, the threshold Vth can be used to determine whether the state of the first transmission unit 80a is a transmission state or a non-power transmission state.

Fig. 20 is an explanatory diagram showing the fifth embodiment, in which four power transmission coils supply two small mobile bodies 200 and 200x. In Fig. 20, five power transmission coils 81a, 81b, 81c, 81d, 81x and two power receiving coils 281 and 281x are shown. Inductances of the five power transmission coils 81a, 81b, 81c, 81d, and 81x are $L_{g1}$, $L_{g2}$, $L_{g3}$, $L_{g4}$, and $L_{gx}$, respectively. In addition, inductances of the power receiving coils 281 and 281x of the small mobile bodies 200 and 200x are $L_v$ and $L_{vx}$, respectively. Coupling coefficients between the power transmission coil 81a

and the power transmission coils 81b, 81c, and 81d are $k_{g1g2}$, $k_{g1g3}$, and $k_{g1g4}$, and coupling coefficients between the power transmission coil 81a and the power receiving coils 281 and 281x are $k_{g1v1}$ and $k_{g1vx}$, respectively. In addition, a coupling coefficient between the power transmission coil 81a and the power receiving coil 281x via the power transmission coil 81x is $k_{g1gvx}$. When supplying power, the coupling coefficients $k_{g1v1}$, $k_{g1g2}$, $k_{g1g3}$, $k_{g1g4}$, $k_{g1vx}$, and $k_{g1gvx}$ satisfy the following equation.

$$k_{g1g2} + k_{g1g3} + k_{g1g4} + k_{g1gvx} + k_{g1vx} < k_{g1v1}$$

When supplying one small mobile body 200, the following equation is satisfied, as explained in the first embodiment, and comparing the two, when there are a plurality of small mobile bodies, $k_{g1gvx}$ + $k_{g1vx}$ is increased by the number of small mobile bodies 200x that are increased

$$k_{g1g2} + k_{g1g3} + k_{g1g4} < k_{g1v}$$

In addition, assuming that a current in the power transmission coil 81a is $I_1$, ta current in the power receiving coil 281 is $I_v$, a current in the power transmission coil 81x is $I_x$, and a current in the power receiving coil 281x is $I_{vx}$, a voltage $V_{81a}$ of the power transmission coil 81a is indicated by the following equation.

$$V_{81a} = Z_1 I_1 + j\omega\ (L_{g1g2} I_2 + L_{g1g3} I_3 + L_{g1g4} I_4 + L_{gx} I_{gx} + L_{vx} I_{vx})$$

Similarly, if there are a plurality of small mobile bodies, $j\omega L_{gx} I_{gx} + j\omega L_{vx} I_{vx}$ increases by the number of small mobile bodies 200x. The small mobile body 200 may have a plurality of power receiving coils. The concept for a case where the small mobile body 200 has a plurality of power receiving coils is the same as for the case where there are a plurality of small mobile bodies, where $j\omega L_{gx} I_{gx} + j\omega L_{vx} I_{vx}$ increases by the number of power receiving coils.

In the present embodiment, when supplying power, the state of the first power transmission unit 80a is the power transmission state in the range where the coupling coefficient $k_{g1v1}$ between the first power transmission coil 81a and the power receiving coil 281 is greater than the sum of the coupling coefficients $k_{g1g2}$, $k_{g1g3}$, $k_{g1g4}$, $k_{g1gvx}$ and $k_{g1vx}$. In addition, the state of the first power transmission unit 80a is the non-power transmission state in a range where the coupling coefficient $k_{g1v1}$ is less than or equal to the sum of the coupling coefficients $k_{g1g2}$, $k_{g1g3}$, $k_{g1g4}$, $k_{g1gvx}$ and $k_{g1vx}$,.

Further, since the strength of the magnetic flux penetrating the power transmission coil 81a and the power receiving coil 281 corresponds to the coupling coefficient $k_{g1v1}$ and also to the voltage $V_{81a}$ of the power transmission coil 81a, the switching control unit 85a can determine the strength of the magnetic flux penetrating the power transmission coil 81a and the power receiving coil 281 using the voltage $V_{81a}$ of the power transmission coil 81a. In other words, the switching control unit 85a switches the state of the first power transmission unit 80a to the resonance state when the magnitude of the magnetic flux generated in the first power transmission coil 81a of the first power transmission unit 80a, which is one of the power transmission units, is above a predetermined threshold value, and switches to the non-resonance state when it is below the threshold value. As a result, the threshold Vth for determining whether the state of the first transmission unit 80a is the transmission state or the non-power transmission state can be used.

Other Embodiments:

Fig. 21 is an explanatory diagram showing a case where power transmission coils 81are aligned in the x direction. The above embodiments described the example in which a plurality of transmission coils 81 are arranged in a grid pattern. In an example shown in Fig. 21, the power transmission coils 81 are aligned in the x direction, and a small mobile body 200 moves in the x direction. The plurality of transmission coils 81 aligned in the x direction can transmit power sequentially as a power receiving coil 281 of the small mobile body 200 moves in the x direction. In other words, this sequence of transmitting coils 81 allows a simple continuous power supply from the plurality of transmitting coils 81 to the power receiving coil 281.

Fig. 22 is an explanatory diagram showing another arrangement of transmission coils 81. An example shown in Fig. 22 has the power transmission coils 81 arranged in a line in the x-direction and the power transmission coils 81 arranged in a two-dimensional grid in the x- and y-directions. Thus, the power transmission coils 81 can be freely arranged to suit the layout of the factory.

Fig. 23 is an explanatory diagram showing yet another arrangement of power transmission coils 81. In an example shown in Fig. 23, power transmission coils 81 are arranged except for some power transmission coils 81 from the example shown in Fig. 22. In other words, the arrangement shown in Fig. 23 is one in which the power transmission coil 81 is located according to the power supply plan from the power transmission coil 81 to the power receiving coil 281. By not locating the power transmission coils 81 in areas where power supply is not required, the degree of freedom in coil location can be improved and costs can be reduced.

Fig. 24 shows an example of changing the depth at which the power transmission coils 81 are located. The example shown in Fig. 24 shows a transmission coil 81h located at a shallow location on the ground plane and a transmission coil 81l located at a deeper location. In addition, two small mobile bodies 200 and 200z are shown. The ground height of a power receiving coil 281 of a small mobile body 200 is lower and the ground height of a power receiving coil 281z of a small mobile body 200z is higher.

The distance between the deeply located transmission coil 811 and the power receiving coil 281 of the small mobile body 200 is h1, and as shown in Fig. 12, a coupling coefficient between the power transmission coil 811 and the power receiving coil 281 can be large, therefore, enough power can be transmitted from the power transmission coil 811 to the power receiving coil 281. In contrast, the distance between the deeply located transmission coil 811 and the power receiving coil 281z of the small mobile body 200z is h2, and as shown in Fig. 12, the coupling coefficient between the power transmission coil 811 and the power receiving coil 281z cannot be increased, therefore, sufficient power cannot be transmitted. On the other hand, since the power transmission coil 81h, which is located in a shallow location, has a narrower distance from the power receiving coils 281, 281z of all the small mobile bodies 200, 200z, the coupling coefficient between the power transmission coil 81h and the power receiving coils 281, 281z can be increased and sufficient power can be transmitted to the power receiving coils 281, 281z.

The example shown in Fig. 24 allows for the mixing of a plurality of small mobile bodies 200 and 200z with different heights of power receiving coils 281 and 281z. Further, for the small mobile body 200 with a low ground clearance of the power receiving coil 281, power is supplied from both power transmission coils 811 and 81h, and for the small mobile body 200z with a high ground clearance of the power receiving coil 281z, power is supplied from the power transmission coil 81h. As a result, the number of power supplying frequent to the small mobile body 200 with low ground clearance of the power receiving coil 281 can be increased.

Fig. 25 is an explanatory diagram showing an example of different size, number of turns, and shape of power transmission coils depending on a location of power transmission coils. A power transmission coil 81S located to the left of a power transmission coil 81 is smaller in size than the power transmission coil 81. Therefore, a coupling coefficient when the power transmission coil 81s couples with a power receiving coil 281 becomes smaller. As a result, the amount of power supplied from the transmitting coil 81s to the power receiving coil 281 is small. A power transmission coil 81m located to the left of the power transmission coil 81 is the same size as the power transmission coil 81, but has more turns. Therefore, a coupling coefficient of the power transmission coil 81m coupling to the power receiving coil 281 is larger. As a result, the amount of power supplied from the power transmission coil 81m to the power receiving coil 281 is large. Thus, by changing the size and number of turns of the power transmission coil, the amount of power supplied from the power transmission coil to the power receiving coil can be changed.

A power transmission coil 81e located to the right of the power transmission coil 81m has a circular shape. If the wiring lengths of the power transmission coils are the same, the power transmission coil 81e with the circular shape can have a larger area inside the power transmission coil than the rectangular power transmission coil 81. Therefore, when the wiring lengths of the power transmission coils are the same, a coupling coefficient of the power transmission coil 81e can be larger than that of the power transmission coil 81, and the amount of power supplied can be larger. Note that if the power transmission coil is a rectangular power transmission coil 81, it is easy to arrange the power transmission coils 81 without gaps in the area where the power transmission coils are located. As a result, an area where the power receiving coil 281 does not overlap with the power transmission coil 81 can be reduced.

Although in each of the above embodiments, the voltage of the power transmission coil 81a is used to determine the coupling between the power transmission coil 81a and the power receiving coil 281, the power transmission coil 81a and the power transmission coil 81b, etc., the current flowing in the power transmission coil 81a may be used to determine the coupling between the power transmission coil 81a and the power receiving coil 281, the power transmission coil 81a and the power transmission coil 81b, etc.

Although in each of the above embodiments, the impedance of the power transmission unit 80 is switched between the resonance and non-resonance states, or between the power transmission and non-power transmission states, by switching the capacitance of the capacitor 82, the impedance may be configured to switch between the resonance and non-resonance states, or between the power transmission and non-power transmission states, of the power transmission unit 80 by switching the inductance of the power transmission coil 81.

Although in each of the above embodiments, the capacitance of the capacitor 82 was switched using switching control unit 85, a variable capacitor may be used as a capacitor 82. For example, the capacitance of a capacitor may be changed by changing the distance between two pole plates that constitutes the capacitor, using the force due to the magnetic flux received by the capacitor. Although in the example shown in Fig. 3, the capacitors 82a and 82b are connected in parallel, they may be configured to be connected in series. In addition, although the capacitors 82a and 82b are used as the capacitors 82, three or more capacitors may be used and the number of capacitors connected in series or in parallel may be switched. The switch 83 may be a physical connection or disconnection switch, such as a relay, or an electrical connection or disconnection switch, such as a semiconductor switch.

When switching the inductance of the power transmission coils 81, the number of coils connected may be switched by a switch, or a variable inductor that can change the magnitude of inductance may be used. For example, a coil in which the permeability of the core material changes may be used as a variable inductor. The switch may change the number of coil turns, or a plurality of coils may be connected in series or parallel, and the switch may change the number of coils connected. As with switching the capacitance of the capacitor, the switch may be a physical connection or disconnection, such as a relay, or an electrical connection or disconnection, such as a semiconductor switch.

A variable resistor may be disposed in the power transmission circuit 80 and the impedance may be changed by changing an electrical resistance of the variable resistor. The electrical resistance of the variable resistor is the real component of impedance. The variable resistor has a mechanism to vary the length and width of an internal resistive element. A potentiometer may be used as a variable resistor, for example. In addition, a plurality of resistors may be arranged in series or parallel, and a switch may be used to switch the number of resistors connected to the power transmission circuit 80. Similar to switching the capacitance of a capacitor or switching the inductance of a coil, this switch may be physically connected or disconnected, such as a relay, or electrically connected or disconnected, such as a semiconductor switch. The variable capacitor, the variable inductor, and the variable resistor are examples of variable impedance devices, and at least one of the variable impedance devices may be used to change the impedance of the power transmission circuit 80 to switch between the resonance and non-resonance states, or between the power transmission and non-power transmission states.

Although in each of the above embodiments, magnetic flux is measured indirectly by measuring the voltage and current of the power transmission coil, magnetic flux may also be measured using a magnetic sensor such as a Hall sensor.

It should be appreciated that the present disclosure can be realized in various forms, and for example, addition to a wireless power supply system, it can be realized in the form of a power transmission device or the like.

The present disclosure is not limited to the embodiments described above, but can be realized in various configurations to the extent that the scope is not departed from. Rather, the invention is defined by the features of the independent claims 1,3,6 and 8. Preferred embodiments are defined in the dependent claims.

## Claims

**1.** A wireless power supply system (100) for wirelessly supplying power to a mobile body (200) including a power receiving unit (280) having a power receiving coil (281), the wireless power supply system comprising:

an AC power supply unit (20);

a plurality of power transmission units (80) disposed in at least a part of a moving range of the moving body, the plurality of power transmission units include power transmission coils (81) and is configured to receive power from the AC power supply unit and supply power to the power receiving unit via the power transmission coils in a resonance state; and

a switching control unit that is configured to switch a state of a first power transmission unit (80a) to a resonance state when the magnitude of the magnetic flux generated in a first power transmission coil (81a) of the first power transmission unit, which is one of the plurality of power transmission units, is greater than a predetermined threshold value, and is configured to switch to a non-resonance state when the magnitude is less than the threshold value; wherein

the threshold is set as a magnitude that exceeds the magnetic flux generated in the first power transmission coil due to a coupling between the first power transmission coil and a second power transmission coil (81b) of a second power transmission unit (80b), which is adjacent to the first power transmission coil, and

a coupling relationship between the first power transmission coil and the second power transmission coil is a coupling relationship in which a coupling coefficient between the power receiving coil and the first power transmission coil is greater than or equal to the sum of coupling coefficients of the first power transmission coil and the second power transmission coil.

**2.** The wireless power supply system according to claim 1, wherein

the power transmission unit includes a capacitance modifier that changes a capacitance of a capacitor connected to the power transmission coil, and

the switching control unit is configured to drive the capacitance modifier to switch the capacitance of the capacitor between a capacitance that is in the resonance state and a capacitance that is in the non-resonance state.

**3.** A wireless power supply system (100) for wirelessly supplying power to a mobile body (200) including a power receiving unit (280) having a power receiving coil (281), the wireless power supply system comprising:

an AC power supply unit (20);
a plurality of power transmission units (80) disposed in at least a part of a moving range of the moving body, the plurality of power transmission units include power transmission coils (81) and is conf igured to receive power from the AC power supply unit and configured to supply power to the power receiving unit via the power transmission coils in a resonance state; and
a switching control unit that is configured to switch a state of a first power transmission unit (80a) to a resonance state when the magnitude of the magnetic flux generated in a first power transmission coil (81a) of the first power transmission unit, which is one of the plurality of power transmission units, is greater than a predetermined threshold value, and switches to a non-resonance state when the magnitude is less than the threshold value; wherein
the threshold is set as a magnitude that exceeds the magnetic flux generated in the first power transmission coil due to a coupling between the first power transmission coil and a second power transmission coil (81b) of a second power transmission unit (80b), which is adjacent to the first power transmission coil, and
the predetermined threshold value is set by a relative distance between the first power transmission coil and the second power transmission coil.

**4.** The wireless power supply system according to claim 3, wherein
a coupling relationship between the first power transmission coil and the second power transmission coil is a coupling relationship in which a coupling coefficient between the power receiving coil and the first power transmission coil is greater than or equal to the sum of coupling coefficients of the first power transmission coil and the second power transmission coil.

**5.** The wireless power supply system according to claim3, wherein
the relative distance is a distance between a center of the first power transmission coil and a center of the second power transmission coil.

**6.** A wireless power supply system (100) for wirelessly supplying power to a mobile body (200) including a power receiving unit (280) having a power receiving coil (281), the wireless power supply system comprising:

an AC power supply unit (20);
a plurality of power transmission units (80) disposed in at least a part of a moving range of the moving body, the plurality of power transmission units include power transmission coils (81) and is conf igured to receive power from the AC power supply unit and is configured to supply power to the power receiving unit via the power transmission coils; and
a switching control unit that is configured to switch a state of a first power transmission unit (80a) to a power transmission state when the magnitude of the magnetic flux generated in a first power transmission coil (81a) of the first power transmission unit, which is one of the plurality of power transmission units, is greater than a predetermined threshold value, and configured to switch to a non-power transmission state when the magnitude is less than the threshold value; wherein
the threshold is set as a magnitude that exceeds the magnetic flux generated in the first power transmission coil due to a coupling between the first power transmission coil and a second power transmission coil (81b) of at least one or more second power transmission units (80b) that are magnetically coupled to the first power transmission coiland,
a coupling relationship between the first power transmission coil and the second power transmission coil is a coupling relationship in which a coupling coefficient between the power receiving coil and the first power transmission coil is greater than or equal to the sum of coupling coefficients of the first power transmission coil and the second power transmission coil.

**7.** The wireless power supply system according to claim 6, wherein
the second power transmission coil is adjacent to the first power transmission coil.

**8.** A wireless power supply system (100) for wirelessly supplying power to a mobile body (200) including a power receiving unit (280) having a power receiving coil (281), the wireless power supply system comprising:

an AC power supply unit (20);
a plurality of power transmission units (80) disposed in at least a part of a moving range of the moving body, the plurality of power transmission units include power transmission coils (81) and is configured to receive power from the AC power supply unit and is configured to supply power to the power receiving unit via the power transmission coils; and
a switching control unit that is configured to switch a state of a first power transmission unit (80a) to a power transmission state when the magnitude of the magnetic flux generated in a first power transmission coil (81a) of the first power transmission unit, which is one of the plurality of power transmission units, is greater than a predetermined threshold value, and switches to a non-power transmission state when the magnitude is less than the threshold value; wherein
the threshold is set as a magnitude that exceeds the magnetic flux generated in the first power transmission coil due to a coupling between the first power transmission coil and a second power transmission coil (81b) of at least one or more second power transmission units (80b) that are magnetically coupled to the first power transmission coil, and
the predetermined threshold value is set by a relative distance between the first power transmission coil and the second power transmission coil.

**9.** The wireless power supply system according to claim 8, wherein
a coupling relationship between the first power transmission coil and the second power transmission coil is a coupling relationship in which a coupling coefficient between the power receiving coil and the first power transmission coil is greater than or equal to the sum of coupling coefficients of the first power transmission coil and the second power transmission coil.

**10.** The wireless power supply system according to claim 9, wherein
the relative distance is a distance between a center of the first power transmission coil and a center of the second power transmission coil.

**11.** The wireless power supply system according to any one of claims 6 to 10, wherein
The switching control unit is configured to switch between the power transmission state and the non-power transmission state in the first power transmission unit by changing an impedance of the first power transmission unit.

**12.** Wireless power supply system according to claim 11

the switching control unit is configured to switch the state of the first power transmission unit to the resonance state when the state of the first power transmission unit is switched to the power transmission state, and
the switching control unit is configured to switch the state of the first power transmission unit to the non-resonance state when the state of the first power transmission unit is switched to the non-power transmission state.

**13.** The wireless power supply system according to claim 12, wherein
the first power transmission unit includes a variable impedance device that can switch between the resonance state and the non-resonance state.

**14.** The wireless power supply system according to claim 13, wherein
the variable impedance device includes at least one of a variable inductor and a variable capacitor.

**15.** The wireless power supply system according to any one of claims 1 to 14, wherein
the first power transmission coil and the second power transmission coil are arranged on a plane.

**16.** The wireless power supply system according to claim 15, wherein
the first power transmission coil and the second power transmission coil are arranged in a grid or honeycomb shape.

**17.** The wireless power supply system according to any one of claims 1 to 14, wherein
the first power transmission coil and the second power transmission coil are aligned on a line.

**18.** The wireless power supply system according to any one of claims 1 to 14, wherein
the switching control unit determines the magnitude of the magnetic flux generated in the first power transmission coil using a voltage or current of the first power transmission coil.

**19.** The wireless power supply system according to any one of claims 1 to 18, wherein

the power transmission coils of the plurality of power transmission units are arranged so that the sum of the product of:

the impedance due to the mutual inductance of the first power transmission coil and the power receiving coil and the current in the first power transmission coil,
the impedance due to the mutual inductance between the first power transmission coil and the second power transmission coils, and
the currents flowing in the second power transmission coils,

is less than the product of the impedance due to the mutual inductance of the first power transmission coil and the current flowing in the power receiving coil.

**20.** The wireless power supply system according to any one of claims 1 to 19, wherein
the power transmission coils of the plurality of transmission units are arranged such that the coupling coefficient between the power transmission coil of at least one of the plurality of transmission units and the power receiving coil is greater than zero.

**21.** The wireless power supply system according to any one of claims 1 to 19, wherein
a position at which the switching control unit switches the state of resonance of the power transmission unit is a position at which the coupling coefficient between the power transmission coil and the power receiving coil of the power transmission unit is positive.

**Patentansprüche**

**1.** Drahtloses Energieversorgungssystem (100) zur drahtlosen Energieversorgung eines mobilen Körpers (200) mit einer Energieempfangseinheit (280), die eine Energieempfangsspule (281) aufweist, wobei das drahtlose Energieversorgungssystem umfasst:

eine Wechselstromversorgungseinheit (20);
eine Vielzahl von Energieübertragungseinheiten (80), die in mindestens einem Teil eines Bewegungsbereichs des mobilen Körpers angeordnet sind, wobei die Vielzahl von Energieübertragungseinheiten Energieübertragungsspulen (81) umfasst und ausgebildet ist, um Energie von der Wechselstromversorgungseinheit zu empfangen und Energie, in einem Resonanzzustand, an die Energieempfangseinheit über die Energieübertragungsspulen zu liefern; und
eine Schaltsteuerungseinheit, die ausgebildet ist, um einen Zustand einer ersten Energieübertragungseinheit (80a) in einen Resonanzzustand zu schalten, wenn die Größe des magnetischen Flusses, der in einer ersten Energieübertragungsspule (81a) der ersten Energieübertragungseinheit, die eine der Vielzahl von Energieübertragungseinheiten ist, erzeugt wird, größer als ein vorbestimmter Schwellenwert ist, und ausgebildet ist, um in einen Nicht-Resonanzzustand zu schalten, wenn die Größe kleiner als der Schwellenwert ist; wobei
der Schwellenwert als eine Größe festgelegt ist, die den magnetischen Fluss übersteigt, der in der ersten Energieübertragungsspule aufgrund einer Kopplung zwischen der ersten Energieübertragungsspule und einer zweiten Energieübertragungsspule (81b) einer zweiten Energieübertragungseinheit (80b), die zu der ersten Energieübertragungsspule benachbart ist, erzeugt wird, und
eine Kopplungsbeziehung zwischen der ersten Energieübertragungsspule und der zweiten Energieübertragungsspule eine Kopplungsbeziehung ist, bei der ein Kopplungskoeffizient zwischen der Energieempfangsspule und der ersten Energieübertragungsspule größer als oder gleich der Summe der Kopplungskoeffizienten der ersten Energieübertragungsspule und der zweiten Energieübertragungsspule ist.

**2.** Drahtloses Energieversorgungssystem nach Anspruch 1, wobei

die Energieübertragungseinheit einen Kapazitätsmodifikator umfasst, der eine Kapazität eines mit der Energieübertragungsspule verbundenen Kondensators ändert, und
die Schaltsteuerungseinheit ausgebildet ist, um den Kapazitätsmodifikator anzusteuern, um die Kapazität des Kondensators zwischen einer Kapazität, die sich im Resonanzzustand befindet, und einer Kapazität, die sich im Nicht-Resonanzzustand befindet, umzuschalten.

**3.** Drahtloses Energieversorgungssystem (100) zur drahtlosen Energieversorgung eines mobilen Körpers (200) mit einer Energieempfangseinheit (280), die eine Energieempfangsspule (281) aufweist, wobei das drahtlose Energieversorgungssystem umfasst:

eine Wechselstromversorgungseinheit (20);
eine Vielzahl von Energieübertragungseinheiten (80), die in mindestens einem Teil eines Bewegungsbereichs des mobilen Körpers angeordnet sind, wobei die Vielzahl von Energieübertragungseinheiten Energieübertragungsspulen (81) umfasst und ausgebildet ist, um Energie von der Wechselstromversorgungseinheit zu empfangen und Energie, in einem Resonanzzustand, an die Energieempfangseinheit über die Energieübertragungsspulen zu liefern; und
eine Schaltsteuerungseinheit, die ausgebildet ist, um einen Zustand einer ersten Energieübertragungseinheit (80a) in einen Resonanzzustand zu schalten, wenn die Größe des magnetischen Flusses, der in einer ersten Energieübertragungsspule (81a) der ersten Energieübertragungseinheit, die eine der Vielzahl von Energieübertragungseinheiten ist, erzeugt wird, größer als ein vorbestimmter Schwellenwert ist, und in einen Nicht-Resonanzzustand schaltet, wenn die Größe kleiner als der Schwellenwert ist; wobei
der Schwellenwert als eine Größe festgelegt ist, die den magnetischen Fluss übersteigt, der in der ersten Energieübertragungsspule aufgrund einer Kopplung zwischen der ersten Energieübertragungsspule und einer zweiten Energieübertragungsspule (81b) einer zweiten Energieübertragungseinheit (80b), die zu der ersten Energieübertragungsspule benachbart ist, erzeugt wird, und
der vorgegebene Schwellenwert durch einen relativen Abstand zwischen der ersten Energieübertragungsspule und der zweiten Energieübertragungsspule festgelegt wird.

**4.** Drahtloses Energieversorgungssystem nach Anspruch 3, wobei
eine Kopplungsbeziehung zwischen der ersten Energieübertragungsspule und der zweiten Energieübertragungsspule eine Kopplungsbeziehung ist, bei der ein Kopplungskoeffizient zwischen der Energieempfangsspule und der ersten Energieübertragungsspule größer als oder gleich der Summe der Kopplungskoeffizienten der ersten Energieübertragungsspule und der zweiten Energieübertragungsspule ist.

**5.** Drahtloses Energieversorgungssystem nach Anspruch 3, wobei
der relative Abstand ein Abstand zwischen einem Mittelpunkt der ersten Kraftübertragungsspule und einem Mittelpunkt der zweiten Kraftübertragungsspule ist.

**6.** Drahtloses Energieversorgungssystem (100) zur drahtlosen Energieversorgung eines mobilen Körpers (200) mit einer Energieempfangseinheit (280), die eine Energieempfangsspule (281) aufweist, wobei das drahtlose Energieversorgungssystem umfasst:

eine Wechselstromversorgungseinheit (20);
eine Vielzahl von Energieübertragungseinheiten (80), die in mindestens einem Teil eines Bewegungsbereichs des mobilen Körpers angeordnet sind, wobei die Vielzahl von Energieübertragungseinheiten Energieübertragungsspulen (81) umfasst und ausgebildet ist, um Energie von der Wechselstromversorgungseinheit zu empfangen und Energie an die Energieempfangseinheit über die Energieübertragungsspulen zu liefern; und
eine Schaltsteuerungseinheit, die ausgebildet ist, um einen Zustand einer ersten Energieübertragungseinheit (80a) in einen Energieübertragungszustand zu schalten, wenn die Größe des magnetischen Flusses, der in einer ersten Energieübertragungsspule (81a) der ersten Energieübertragungseinheit, die eine der Vielzahl von Energieübertragungseinheiten ist, erzeugt wird, größer als ein vorbestimmter Schwellenwert ist, und ausgebildet ist, um in einen Nicht-Energieübertragungszustand zu schalten, wenn die Größe kleiner als der Schwellenwert ist; wobei
der Schwellenwert als eine Größe festgelegt ist, die den magnetischen Fluss übersteigt, der in der ersten Energieübertragungsspule aufgrund einer Kopplung zwischen der ersten Energieübertragungsspule und einer zweiten Energieübertragungsspule (81b) von mindestens einer oder mehreren zweiten Energieübertragungseinheiten (80b), die magnetisch mit der ersten Energieübertragungsspule gekoppelt sind, erzeugt wird, und
eine Kopplungsbeziehung zwischen der ersten Energieübertragungsspule und der zweiten Energieübertragungsspule eine Kopplungsbeziehung ist, bei der ein Kopplungskoeffizient zwischen der Energieempfangsspule und der ersten Energieübertragungsspule größer als oder gleich der Summe der Kopplungskoeffizienten der ersten Energieübertragungsspule und der zweiten Energieübertragungsspule ist.

**7.** Drahtloses Energieversorgungssystem nach Anspruch 6, wobei
die zweite Energieübertragungsspule zu der ersten Energieübertragungsspule benachbart ist.

**8.** Drahtloses Energieversorgungssystem (100) zur drahtlosen Energieversorgung eines mobilen Körpers (200) mit einer Energieempfangseinheit (280), die eine Energieempfangsspule (281) aufweist, wobei das drahtlose Energieversorgungssystem umfasst:

eine Wechselstromversorgungseinheit (20);
eine Vielzahl von Energieübertragungseinheiten (80), die in mindestens einem Teil eines Bewegungsbereichs des mobilen Körpers angeordnet sind, wobei die Vielzahl von Energieübertragungseinheiten Energieübertragungsspulen (81) umfasst und ausgebildet ist, um Energie von der Wechselstromversorgungseinheit zu empfangen und Energie an die Energieempfangseinheit über die Energieübertragungsspulen zu liefern; und
eine Schaltsteuerungseinheit, die ausgebildet ist, um einen Zustand einer ersten Energieübertragungseinheit (80a) in einen Energieübertragungszustand zu schalten, wenn die Größe des magnetischen Flusses, der in einer ersten Energieübertragungsspule (81a) der ersten Energieübertragungseinheit, die eine der Vielzahl von Energieübertragungseinheiten ist, erzeugt wird, größer als ein vorbestimmter Schwellenwert ist, und in einen Nicht-Energieübertragungszustand schaltet, wenn die Größe kleiner als der Schwellenwert ist; wobei
der Schwellenwert als eine Größe festgelegt ist, die den magnetischen Fluss übersteigt, der in der ersten Energieübertragungsspule aufgrund einer Kopplung zwischen der ersten Energieübertragungsspule und einer zweiten Energieübertragungsspule (81b) von mindestens einer oder mehreren zweiten Energieübertragungseinheiten (80b), die magnetisch mit der ersten Energieübertragungsspule gekoppelt sind, erzeugt wird, und
der vorgegebene Schwellenwert durch einen relativen Abstand zwischen der ersten Energieübertragungsspule und der zweiten Energieübertragungsspule festgelegt wird.

**9.** Drahtloses Energieversorgungssystem nach Anspruch 8, wobei
eine Kopplungsbeziehung zwischen der ersten Energieübertragungsspule und der zweiten Energieübertragungsspule eine Kopplungsbeziehung ist, bei der ein Kopplungskoeffizient zwischen der Energieempfangsspule und der ersten Energieübertragungsspule größer als oder gleich der Summe der Kopplungskoeffizienten der ersten Energieübertragungsspule und der zweiten Energieübertragungsspule ist.

**10.** Drahtloses Energieversorgungssystem nach Anspruch 9, wobei
der relative Abstand ein Abstand zwischen einem Mittelpunkt der ersten Kraftübertragungsspule und einem Mittelpunkt der zweiten Kraftübertragungsspule ist.

**11.** Drahtloses Energieversorgungssystem nach einem der Ansprüche 6 bis 10, wobei
die Schaltsteuerungseinheit ausgebildet ist, um zwischen dem Energieübertragungszustand und dem Nicht-Energieübertragungszustand in der ersten Energieübertragungseinheit umzuschalten, indem eine Impedanz der ersten Energieübertragungseinheit geändert wird.

**12.** Drahtloses Energieversorgungssystem nach Anspruch 11, wobei

die Schaltsteuerungseinheit ausgebildet ist, um den Zustand der ersten Energieübertragungseinheit in den Resonanzzustand zu schalten, wenn der Zustand der ersten Energieübertragungseinheit in den Energieübertragungszustand geschaltet wird, und
die Schaltsteuerungseinheit ausgebildet ist, um den Zustand der ersten Energieübertragungseinheit in den Nicht-Resonanzzustand zu schalten, wenn der Zustand der ersten Energieübertragungseinheit in den Nicht-Energieübertragungszustand geschaltet wird.

**13.** Drahtloses Energieversorgungssystem nach Anspruch 12, wobei
die erste Energieübertragungseinheit eine Vorrichtung mit variabler Impedanz aufweist, die zwischen dem Resonanzzustand und dem Nicht-Resonanzzustand umschalten kann.

**14.** Drahtloses Energieversorgungssystem nach Anspruch 13, wobei
die Vorrichtung mit variabler Impedanz mindestens eine von einer variablen Induktivität und einem variablen Kondensator aufweist.

**15.** Drahtloses Energieversorgungssystem nach einem der Ansprüche 1 bis 14, wobei
die erste Energieübertragungsspule und die zweite Energieübertragungsspule in einer Ebene angeordnet sind.

**16.** Drahtloses Energieversorgungssystem nach Anspruch 15, wobei
die erste Energieübertragungsspule und die zweite Energieübertragungsspule in einer Gitter- oder Wabenform angeordnet sind.

**17.** Drahtloses Energieversorgungssystem nach einem der Ansprüche 1 bis 14, wobei
die erste Energieübertragungsspule und die zweite Energieübertragungsspule auf einer Linie ausgerichtet sind.

**18.** Drahtloses Energieversorgungssystem nach einem der Ansprüche 1 bis 14, wobei die Schaltsteuerungseinheit die Größe des in der ersten Energieübertragungsspule erzeugten magnetischen Flusses anhand einer Spannung oder eines Stroms der ersten Energieübertragungsspule bestimmt.

**19.** Drahtloses Energieversorgungssystem nach einem der Ansprüche 1 bis 18, wobei

die Energieübertragungsspulen der Vielzahl von Energieübertragungseinheiten so angeordnet sind, dass die Summe des Produkts aus:

der Impedanz aufgrund der gegenseitigen Induktivität der ersten Energieübertragungsspule und der Energieempfangsspule und dem Strom in der ersten Energieübertragungsspule,
der Impedanz aufgrund der gegenseitigen Induktivität zwischen der ersten Energieübertragungsspule und den zweiten Energieübertragungsspulen, und
den in den zweiten Energieübertragungsspulen fließenden Strömen,

kleiner ist als das Produkt aus der Impedanz aufgrund der gegenseitigen Induktivität der ersten Energieübertragungsspule und dem in der Energieempfangsspule fließenden Strom.

**20.** Drahtloses Energieversorgungssystem nach einem der Ansprüche 1 bis 19, wobei die Energieübertragungsspulen der Vielzahl von Übertragungseinheiten so angeordnet sind, dass der Kopplungskoeffizient zwischen der Energieübertragungsspule von mindestens einer der Vielzahl von Übertragungseinheiten und der Energieempfangsspule größer als Null ist.

**21.** Drahtloses Energieversorgungssystem nach einem der Ansprüche 1 bis 19, wobei eine Position, bei der die Schaltsteuerungseinheit den Resonanzzustand der Energieübertragungseinheit umschaltet, eine Position ist, bei der der Kopplungskoeffizient zwischen der Energieübertragungsspule und der Energieempfangsspule der Energieübertragungseinheit positiv ist.

## Revendications

**1.** Système d'alimentation en énergie sans fil (100) pour alimenter sans fil un corps mobile (200) comprenant une unité de réception d'énergie (280) ayant une bobine de réception d'énergie (281), le système d'alimentation en énergie sans fil comprenant :

une unité d'alimentation en courant alternatif (20) ;
une pluralité d'unités de transmission d'énergie (80) disposées dans au moins une partie d'une zone de déplacement du corps mobile, la pluralité d'unités de transmission d'énergie comprend des bobines de transmission d'énergie (81) et est configurée pour recevoir de l'énergie de l'unité d'alimentation en courant alternatif et fournir de l'énergie à l'unité de réception d'énergie par l'intermédiaire des bobines de transmission d'énergie dans un état de résonance ; et
une unité de commande de commutation configurée pour commuter un état d'une première unité de transmission d'énergie (80a) à un état de résonance lorsque l'ampleur du flux magnétique généré dans une première bobine de transmission d'énergie (81a) de la première unité de transmission d'énergie, qui est l'une de la pluralité d'unités de transmission d'énergie, est supérieure à une valeur seuil prédéterminée, et est configurée pour commuter à un état de non-résonance lorsque l'ampleur est inférieure à la valeur seuil ; dans lequel
le seuil est défini comme une ampleur qui dépasse le flux magnétique généré dans la première bobine de transmission d'énergie en raison d'un couplage entre la première bobine de transmission d'énergie et une seconde bobine de transmission d'énergie (81b) d'une seconde unité de transmission d'énergie (80b), qui est adjacente à la première bobine de transmission d'énergie, et
une relation de couplage entre la première bobine de transmission d'énergie et la seconde bobine de transmission d'énergie est une relation de couplage dans laquelle un coefficient de couplage entre la bobine de réception d'énergie et la première bobine de transmission d'énergie est supérieur ou égal à la somme des coefficients de couplage de la première bobine de transmission d'énergie et de la seconde bobine de transmission d'énergie.

**2.** Système d'alimentation en énergie sans fil selon la revendication 1, dans lequel

l'unité de transmission d'énergie comprend un modificateur de capacité qui modifie une capacité d'un condensateur connecté à la bobine de transmission d'énergie, et
l'unité de commande de commutation est configurée pour entraîner le modificateur de capacité afin de commuter la capacité du condensateur entre une capacité qui est dans l'état de résonance et une capacité qui est dans l'état de non-résonance.

**3.** Système d'alimentation en énergie sans fil (100) pour alimenter sans fil un corps mobile (200) comprenant une unité de réception d'énergie (280) ayant une bobine de réception d'énergie (281), le système d'alimentation en énergie sans fil comprenant :

une unité d'alimentation en courant alternatif (20) ;
une pluralité d'unités de transmission d'énergie (80) disposées dans au moins une partie d'une zone de déplacement du corps mobile, la pluralité d'unités de transmission d'énergie comprend des bobines de transmission d'énergie (81) et est configurée pour recevoir de l'énergie de l'unité d'alimentation en courant alternatif et est configurée pour fournir de l'énergie à l'unité de réception d'énergie par l'intermédiaire des bobines de transmission d'énergie dans un état de résonance ; et
une unité de commande de commutation configurée pour commuter un état d'une première unité de transmission d'énergie (80a) à un état de résonance lorsque l'ampleur du flux magnétique généré dans une première bobine de transmission d'énergie (81a) de la première unité de transmission d'énergie, qui est l'une de la pluralité d'unités de transmission d'énergie, est supérieure à une valeur seuil prédéterminée, et commute à un état de non-résonance lorsque l'ampleur est inférieure à la valeur seuil ; dans lequel
le seuil est défini comme une ampleur qui dépasse le flux magnétique généré dans la première bobine de transmission d'énergie en raison d'un couplage entre la première bobine de transmission d'énergie et une seconde bobine de transmission d'énergie (81b) d'une seconde unité de transmission d'énergie (80b), qui est adjacente à la première bobine de transmission d'énergie, et
la valeur seuil prédéterminée est définie par une distance relative entre la première bobine de transmission d'énergie et la seconde bobine de transmission d'énergie.

**4.** Système d'alimentation en énergie sans fil selon la revendication 3,
dans lequel
une relation de couplage entre la première bobine de transmission d'énergie et la seconde bobine de transmission d'énergie est une relation de couplage dans laquelle un coefficient de couplage entre la bobine de réception d'énergie et la première bobine de transmission d'énergie est supérieur ou égal à la somme des coefficients de couplage de la première bobine de transmission d'énergie et de la seconde bobine de transmission d'énergie.

**5.** Système d'alimentation en énergie sans fil selon la revendication 3,
dans lequel
la distance relative est une distance entre le centre de la première bobine de transmission d'énergie et le centre de la seconde bobine de transmission d'énergie.

**6.** Système d'alimentation en énergie sans fil (100) pour alimenter sans fil un corps mobile (200) comprenant une unité de réception d'énergie (280) ayant une bobine de réception d'énergie (281), le système d'alimentation en énergie sans fil comprenant :

une unité d'alimentation en courant alternatif (20) ;
une pluralité d'unités de transmission d'énergie (80) disposées dans au moins une partie d'une zone de déplacement du corps mobile, la pluralité d'unités de transmission d'énergie comprend des bobines de transmission d'énergie (81) et est configurée pour recevoir de l'énergie de l'unité d'alimentation en courant alternatif et est configurée pour fournir de l'énergie à l'unité de réception d'énergie par l'intermédiaire des bobines de transmission d'énergie ; et
une unité de commande de commutation configurée pour commuter un état d'une première unité de transmission d'énergie (80a) à un état de transmission d'énergie lorsque l'ampleur du flux magnétique généré dans une première bobine de transmission d'énergie (81a) de la première unité de transmission d'énergie, qui est l'une de la pluralité d'unités de transmission d'énergie, est supérieure à une valeur seuil prédéterminée, et est configurée pour commuter à un état de non-transmission d'énergie lorsque l'ampleur est inférieure à la valeur seuil ; dans lequel
le seuil est défini comme une ampleur qui dépasse le flux magnétique généré dans la première bobine de transmission d'énergie en raison d'un couplage entre la première bobine de transmission d'énergie et une seconde bobine de transmission d'énergie (81b) d'au moins une ou plusieurs secondes unités de transmission d'énergie (80b) qui sont magnétiquement couplées à la première bobine de transmission d'énergie, et
une relation de couplage entre la première bobine de transmission d'énergie et la seconde bobine de transmission d'énergie est une relation de couplage dans laquelle un coefficient de couplage entre la bobine de réception d'énergie et la première bobine de transmission d'énergie est supérieur ou égal à la somme des coefficients de couplage de la première bobine de transmission d'énergie et de la seconde bobine de transmission d'énergie.

**7.** Système d'alimentation en énergie sans fil selon la revendication 6,
dans lequel
la seconde bobine de transmission d'énergie est adjacente à la première bobine de transmission d'énergie.

**8.** Système d'alimentation en énergie sans fil (100) pour alimenter sans fil un corps mobile (200) comprenant une unité de réception d'énergie (280) ayant une bobine de réception d'énergie (281), le système d'alimentation en énergie sans fil comprenant :

une unité d'alimentation en courant alternatif (20) ;
une pluralité d'unités de transmission d'énergie (80) disposées dans au moins une partie d'une zone de déplacement du corps mobile, la pluralité d'unités de transmission d'énergie comprend des bobines de transmission d'énergie (81) et est configurée pour recevoir de l'énergie de l'unité d'alimentation en courant alternatif et est configurée pour fournir de l'énergie à l'unité de réception d'énergie par l'intermédiaire des bobines de transmission d'énergie ; et
une unité de commande de commutation configurée pour commuter un état d'une première unité de transmission d'énergie (80a) à un état de transmission d'énergie lorsque l'ampleur du flux magnétique généré dans une première bobine de transmission d'énergie (81a) de la première unité de transmission d'énergie, qui est l'une de la pluralité d'unités de transmission d'énergie, est supérieure à une valeur seuil prédéterminée, et commute à un état de transmission de non-énergie lorsque l'ampleur est inférieure à la valeur seuil ; dans lequel
le seuil est défini comme une ampleur qui dépasse le flux magnétique généré dans la première bobine de transmission d'énergie en raison d'un couplage entre la première bobine de transmission d'énergie et une seconde bobine de transmission d'énergie (81b) d'au moins une ou plusieurs secondes unités de transmission d'énergie (80b) qui sont magnétiquement couplées à la première bobine de transmission d'énergie, et
la valeur seuil prédéterminée est définie par une distance relative entre la première bobine de transmission d'énergie et la seconde bobine de transmission d'énergie.

**9.** Système d'alimentation en énergie sans fil selon la revendication 8,
dans lequel
une relation de couplage entre la première bobine de transmission d'énergie et la seconde bobine de transmission d'énergie est une relation de couplage dans laquelle un coefficient de couplage entre la bobine de réception d'énergie et la première bobine de transmission d'énergie est supérieur ou égal à la somme des coefficients de couplage de la première bobine de transmission d'énergie et de la seconde bobine de transmission d'énergie.

**10.** Système d'alimentation en énergie sans fil selon la revendication 9,
dans lequel
la distance relative est une distance entre le centre de la première bobine de transmission d'énergie et le centre de la seconde bobine de transmission d'énergie.

**11.** Système d'alimentation en énergie sans fil selon l'une quelconque des revendications 6 à 10, dans lequel
l'unité de commande de commutation est configurée pour commuter entre l'état de transmission d'énergie et l'état de non-transmission d'énergie dans la première unité de transmission d'énergie en modifiant une impédance de la première unité de transmission d'énergie.

**12.** Système d'alimentation en énergie sans fil selon revendication 11,
dans lequel

l'unité de commande de commutation est configurée pour commuter l'état de la première unité de transmission d'énergie à l'état de résonance lorsque l'état de la première unité de transmission d'énergie est commuté à l'état de transmission d'énergie, et
l'unité de commande de commutation est configurée pour commuter l'état de la première unité de transmission d'énergie à l'état de non-résonance lorsque l'état de la première unité de transmission d'énergie est commuté à l'état de non-transmission d'énergie.

**13.** Système d'alimentation en énergie sans fil selon la revendication 12,
dans lequel
la première unité de transmission d'énergie comprend un dispositif à impédance variable qui peut commuter entre l'état de résonance et l'état de non-résonance.

**14.** Système d'alimentation en énergie sans fil selon la revendication 13,
dans lequel
le dispositif à impédance variable comprend au moins l'un parmi un inducteur variable et un condensateur variable.

**15.** Système d'alimentation en énergie sans fil selon l'une quelconque des revendications 1 à 14, dans lequel
la première bobine de transmission d'énergie et la seconde bobine de transmission d'énergie sont disposées sur un plan.

**16.** Système d'alimentation en énergie sans fil selon la revendication 15,
dans lequel
la première bobine de transmission d'énergie et la seconde bobine de transmission d'énergie sont disposées en forme de grille ou de nid d'abeille.

**17.** Système d'alimentation en énergie sans fil selon l'une quelconque des revendications 1 à 14, dans lequel
la première bobine de transmission d'énergie et la seconde bobine de transmission d'énergie sont alignées sur une ligne.

**18.** Système d'alimentation en énergie sans fil selon l'une quelconque des revendications 1 à 14, dans lequel
l'unité de commande de commutation détermine l'ampleur du flux magnétique généré dans la première bobine de transmission d'énergie à l'aide d'une tension ou d'un courant de la première bobine de transmission d'énergie.

**19.** Système d'alimentation en énergie sans fil selon l'une quelconque des revendications 1 à 18, dans lequel

les bobines de transmission d'énergie de la pluralité d'unités de transmission d'énergie sont disposées de telle sorte que la somme du produit de :

l'impédance en raison de l'inductance mutuelle de la première bobine de transmission d'énergie et de la bobine de réception d'énergie et le courant dans la première bobine de transmission d'énergie,
l'impédance en raison de l'inductance mutuelle entre la première bobine de transmission d'énergie et les secondes bobines de transmission d'énergie, et
les courants circulant dans les secondes bobines de transmission d'énergie,

est inférieure au produit de l'impédance en raison de l'inductance mutuelle de la première bobine de transmission d'énergie et du courant circulant dans la bobine de réception d'énergie.

**20.** Système d'alimentation en énergie sans fil selon l'une quelconque des revendications 1 à 19, dans lequel
les bobines de transmission d'énergie de la pluralité d'unités de transmission sont disposées de telle sorte que le coefficient de couplage entre la bobine de transmission d'énergie d'au moins une de la pluralité d'unités de transmission et la bobine de réception d'énergie est supérieur à zéro.

**21.** Système d'alimentation en énergie sans fil selon l'une quelconque des revendications 1 à 19, dans lequel
une position à laquelle l'unité de commande de commutation commute l'état de résonance de l'unité de transmission d'énergie est une position à laquelle le coefficient de couplage entre la bobine de transmission d'énergie et la bobine de réception d'énergie de l'unité de transmission d'énergie est positif.

FIG.1

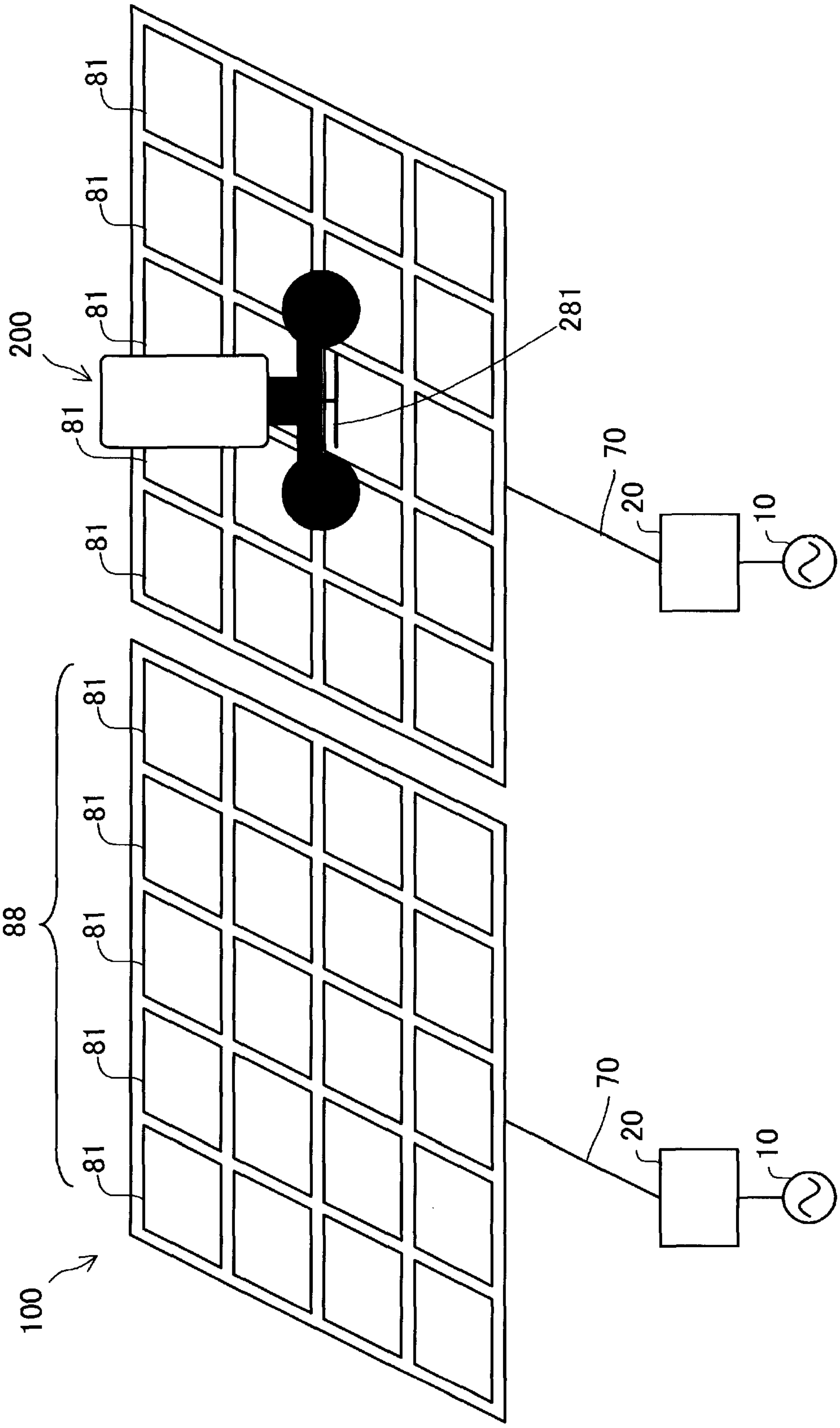

FIG.2

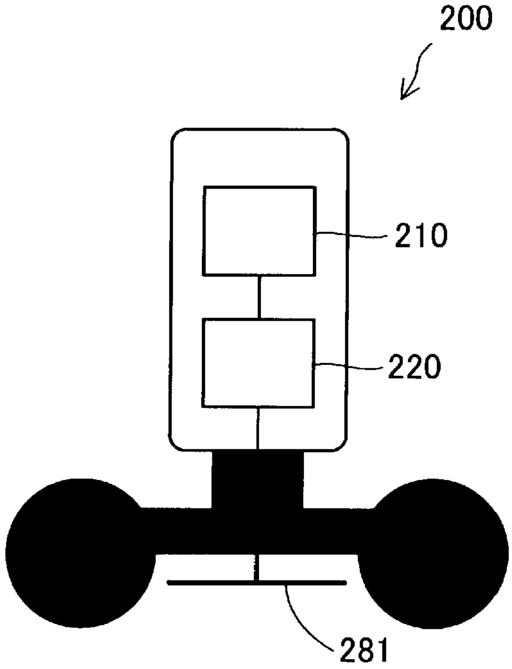
200
210
220
281

FIG.3

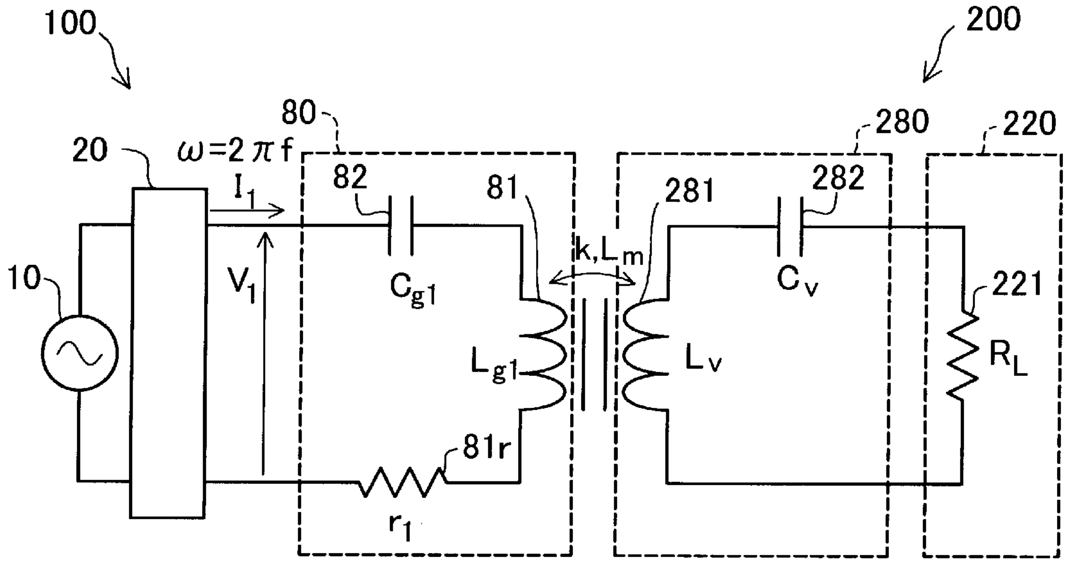
100
200
80
280
220
20
ω=2πf
I1
82
81
281
282
10
V1
Cg1
k,Lm
Cv
221
Lg1
Lv
RL
81r
r1

# FIG.4A

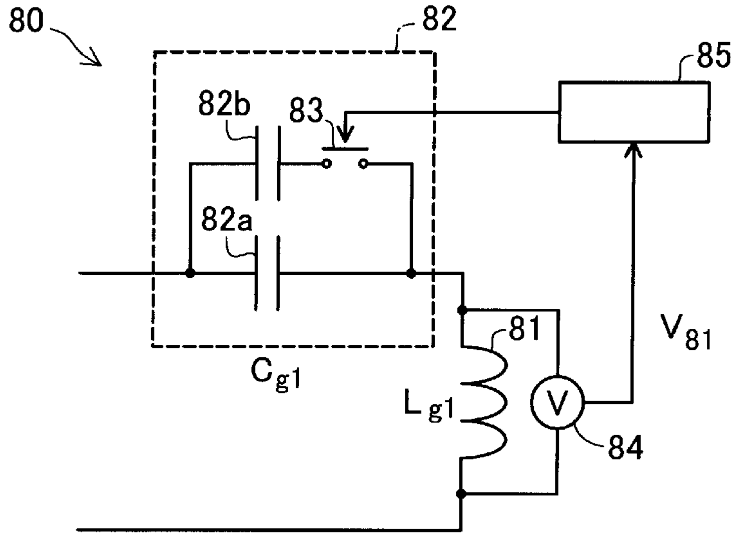
80
82
85
82b
83
82a
81
V81
Cg1
Lg1
V
84

# FIG.4B

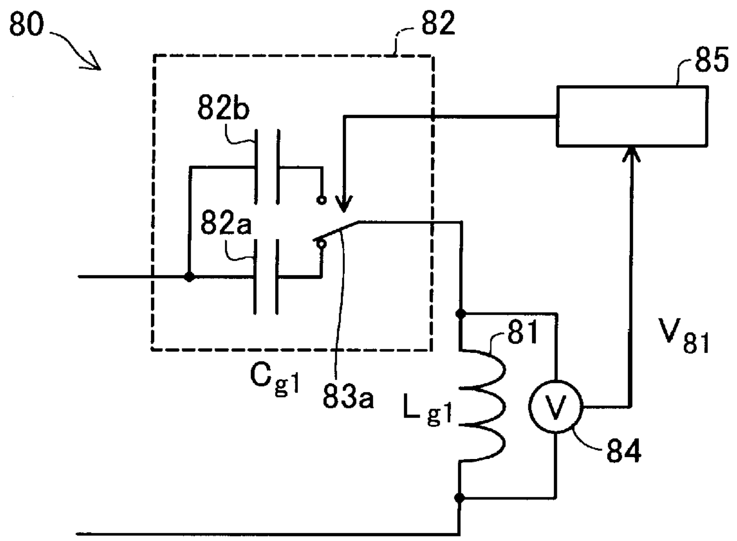
80
82
85
82b
82a
81
V81
Cg1
83a
Lg1
V
84

FIG.4C

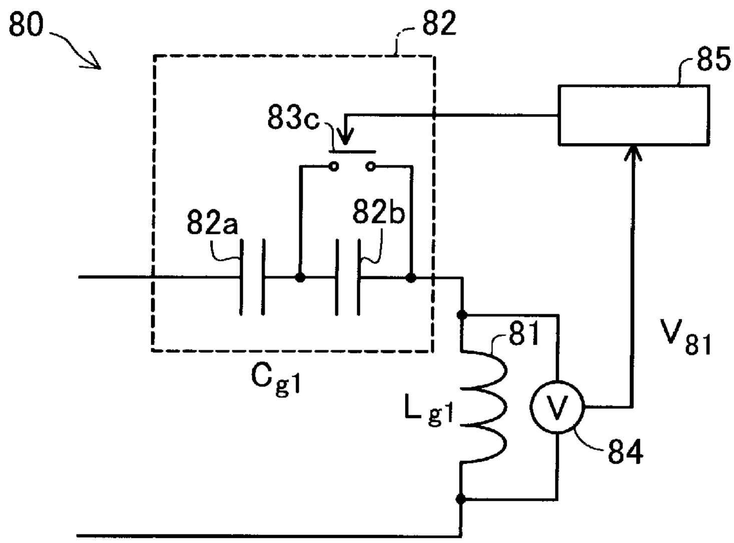

FIG.5

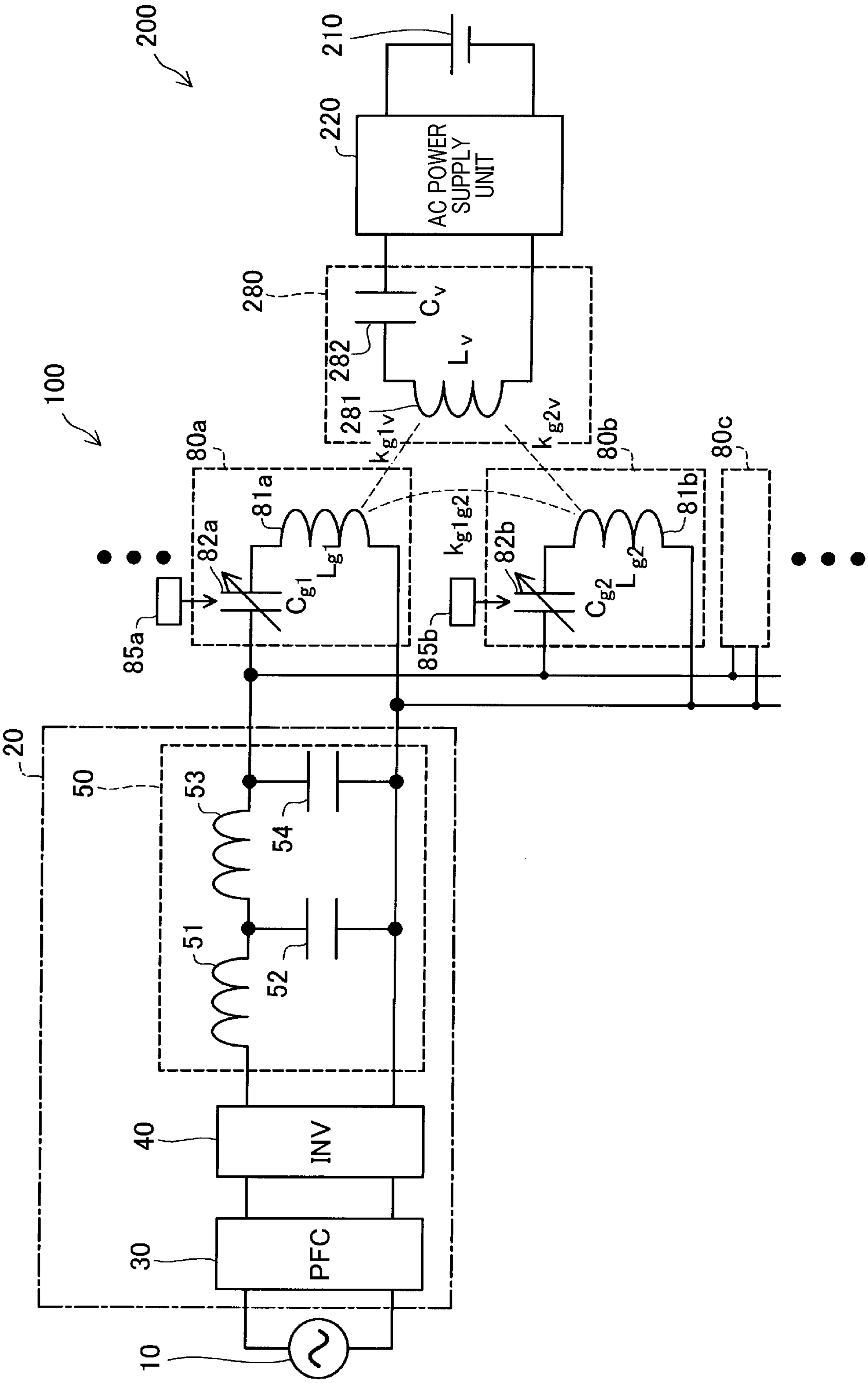
200
210
220
AC POWER SUPPLY UNIT
280
$C_v$
282
$L_v$
281
100
$k_{g1v}$
$k_{g2v}$
80a
81a
82a
$C_{g1}$
$L_{g1}$
85a
$k_{g1g2}$
80b
81b
82b
$C_{g2}$
$L_{g2}$
85b
80c
20
50
53
54
51
52
40
INV
30
PFC
10

# FIG.6

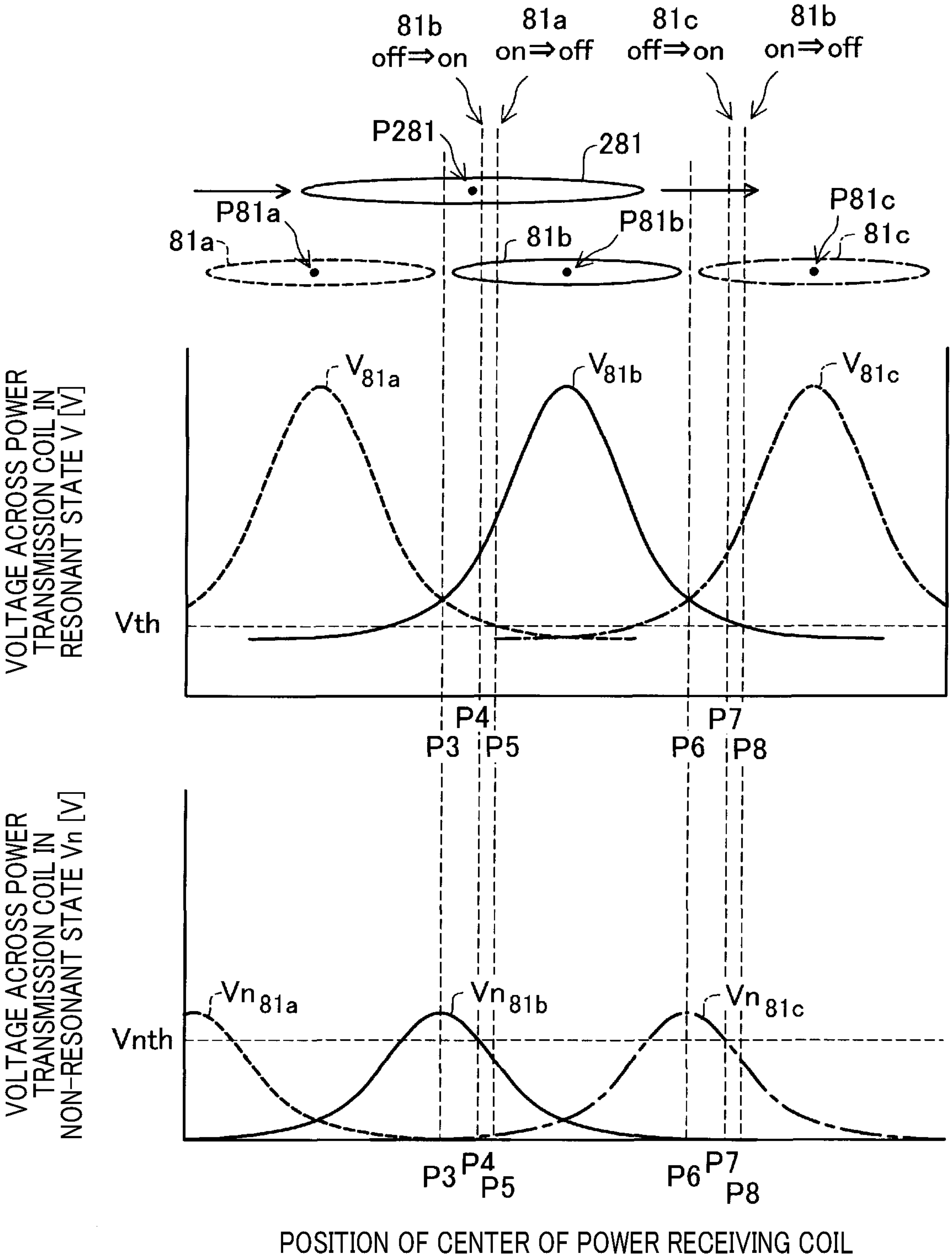
81b
off⇒on
81a
on⇒off
81c
off⇒on
81b
on⇒off
P281
281
P81a
81a
81b
P81b
P81c
81c
VOLTAGE ACROSS POWER TRANSMISSION COIL IN RESONANT STATE V [V]
V81a
V81b
V81c
Vth
P3
P4
P5
P6
P7
P8
VOLTAGE ACROSS POWER TRANSMISSION COIL IN NON-RESONANT STATE Vn [V]
Vn81a
Vn81b
Vn81c
Vnth
P3
P4
P5
P6
P7
P8
POSITION OF CENTER OF POWER RECEIVING COIL

FIG.7

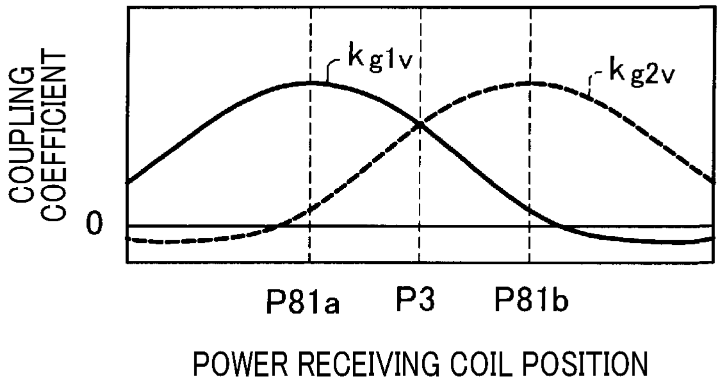


FIG.8

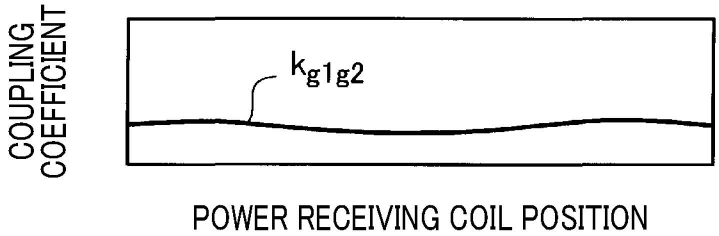


FIG.9

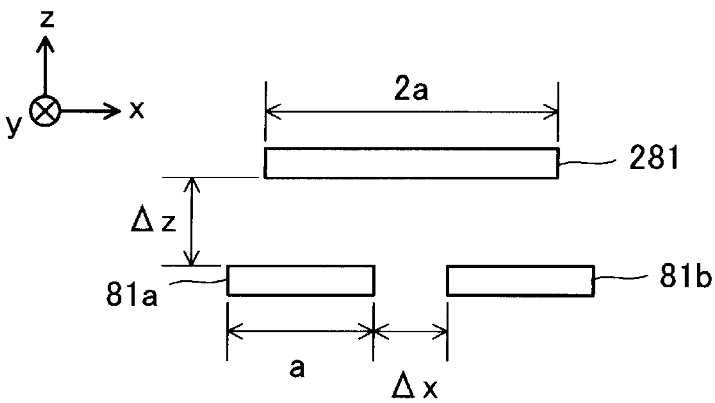

FIG.10

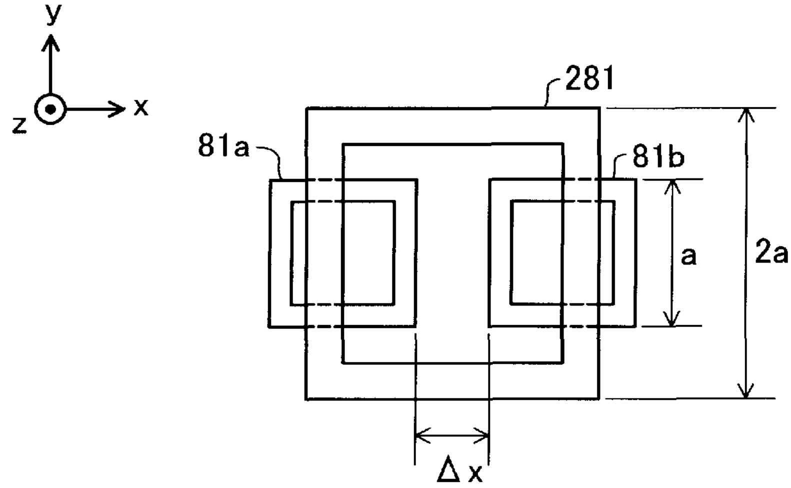
y
x
z
281
81a
81b
a
2a
Δx

FIG.11

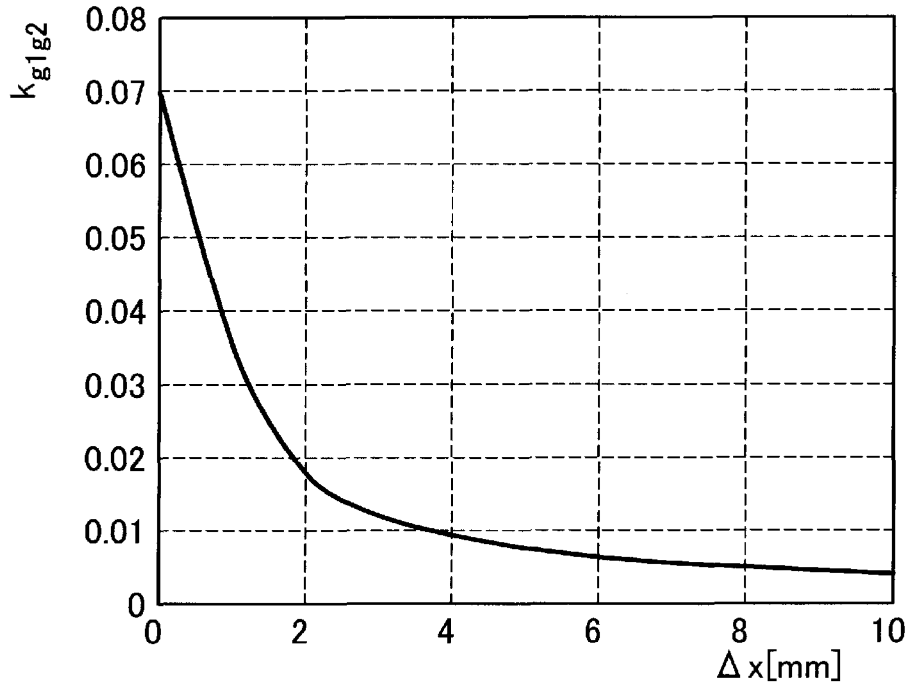
$k_{g1g2}$
0.08
0.07
0.06
0.05
0.04
0.03
0.02
0.01
0
0
2
4
6
8
10
Δx[mm]

# FIG.12

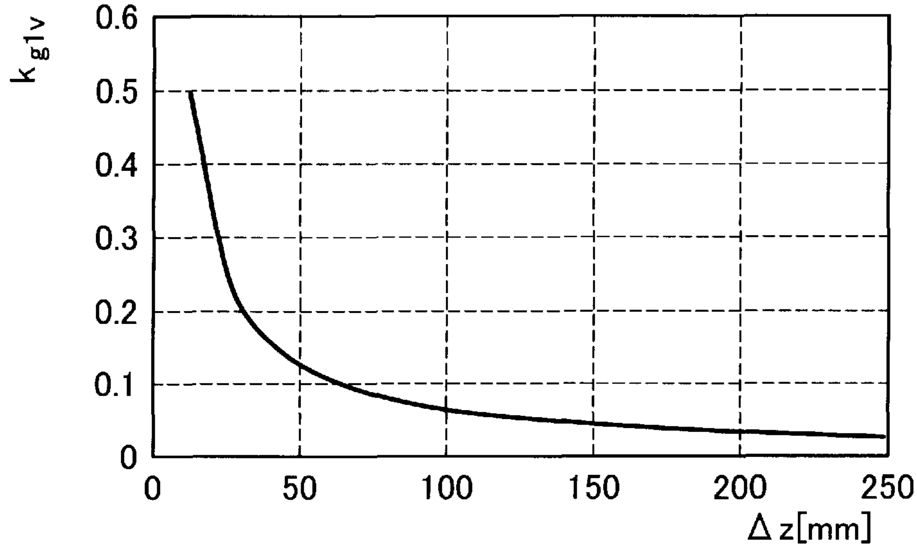
$k_{g1v}$
0.6
0.5
0.4
0.3
0.2
0.1
0
0
50
100
150
200
250
Δz[mm]

# FIG.13

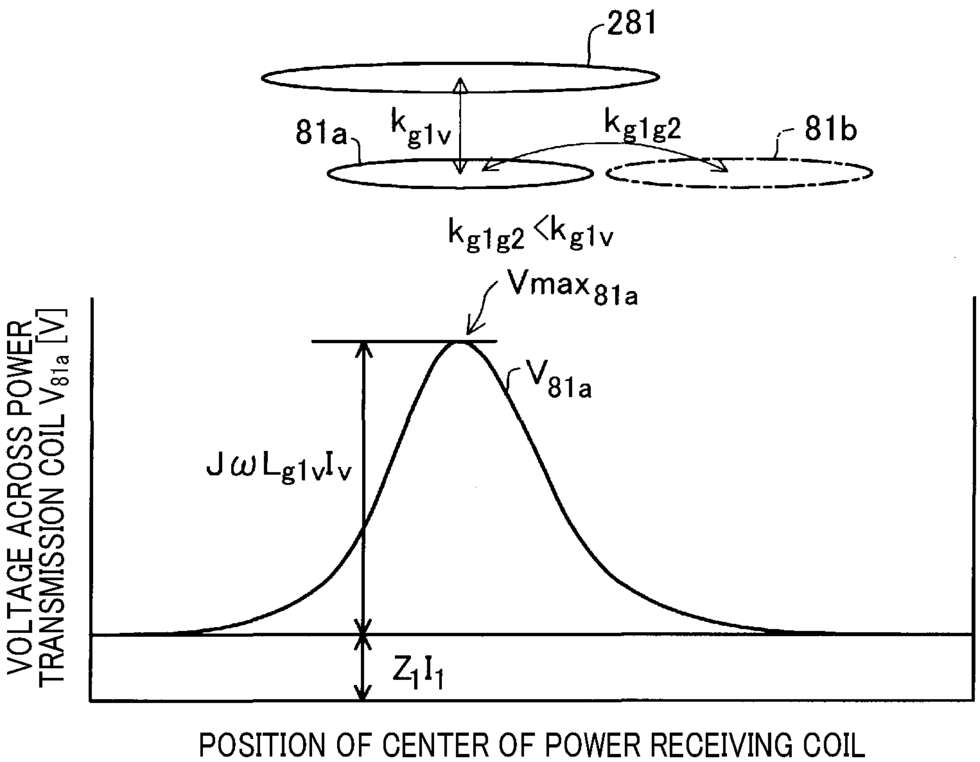
281
81a
$k_{g1v}$
$k_{g1g2}$
81b
$k_{g1g2} < k_{g1v}$
$Vmax_{81a}$
$V_{81a}$
$J\omega L_{g1v} I_v$
$Z_1 I_1$
VOLTAGE ACROSS POWER TRANSMISSION COIL $V_{81a}$ [V]
POSITION OF CENTER OF POWER RECEIVING COIL

# FIG.14

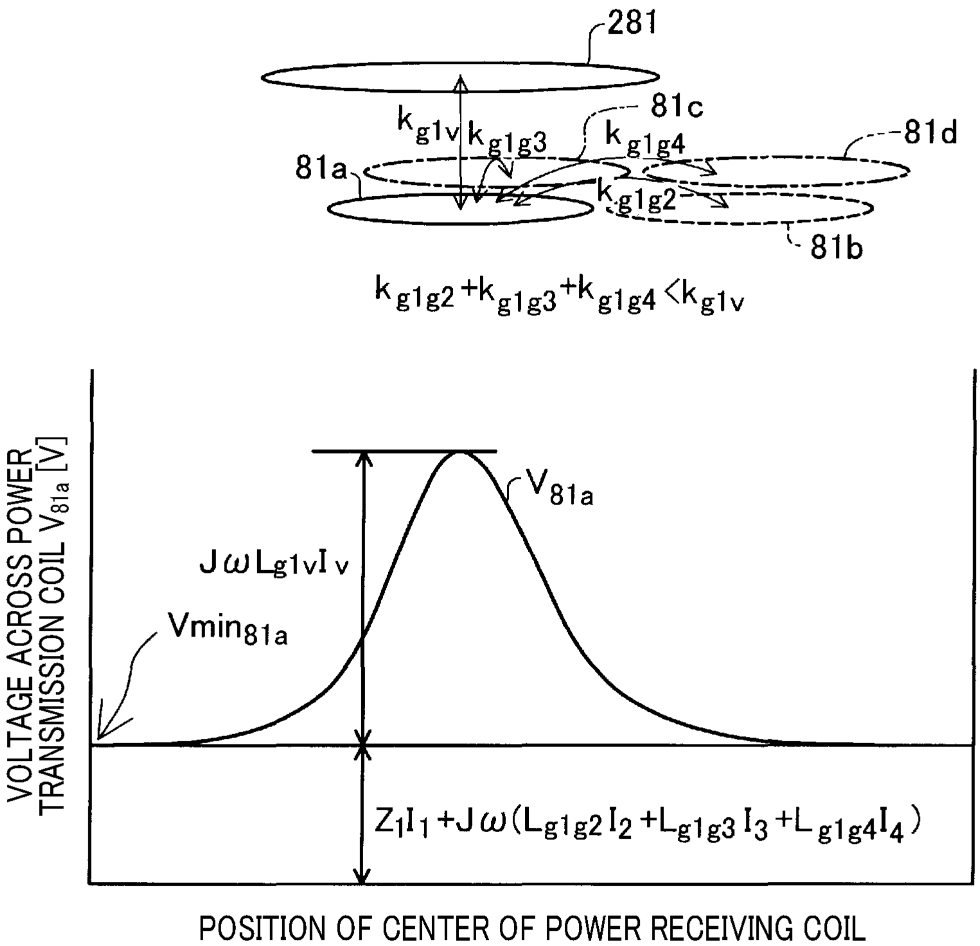
281
81c
81d
81a
81b
$k_{g1v}$
$k_{g1g3}$
$k_{g1g4}$
$k_{g1g2}$
$k_{g1g2}+k_{g1g3}+k_{g1g4}<k_{g1v}$
VOLTAGE ACROSS POWER TRANSMISSION COIL $V_{81a}$ [V]
$V_{81a}$
$J\omega L_{g1v}I_v$
$Vmin_{81a}$
$Z_1I_1+J\omega(L_{g1g2}I_2+L_{g1g3}I_3+L_{g1g4}I_4)$
POSITION OF CENTER OF POWER RECEIVING COIL

FIG.15

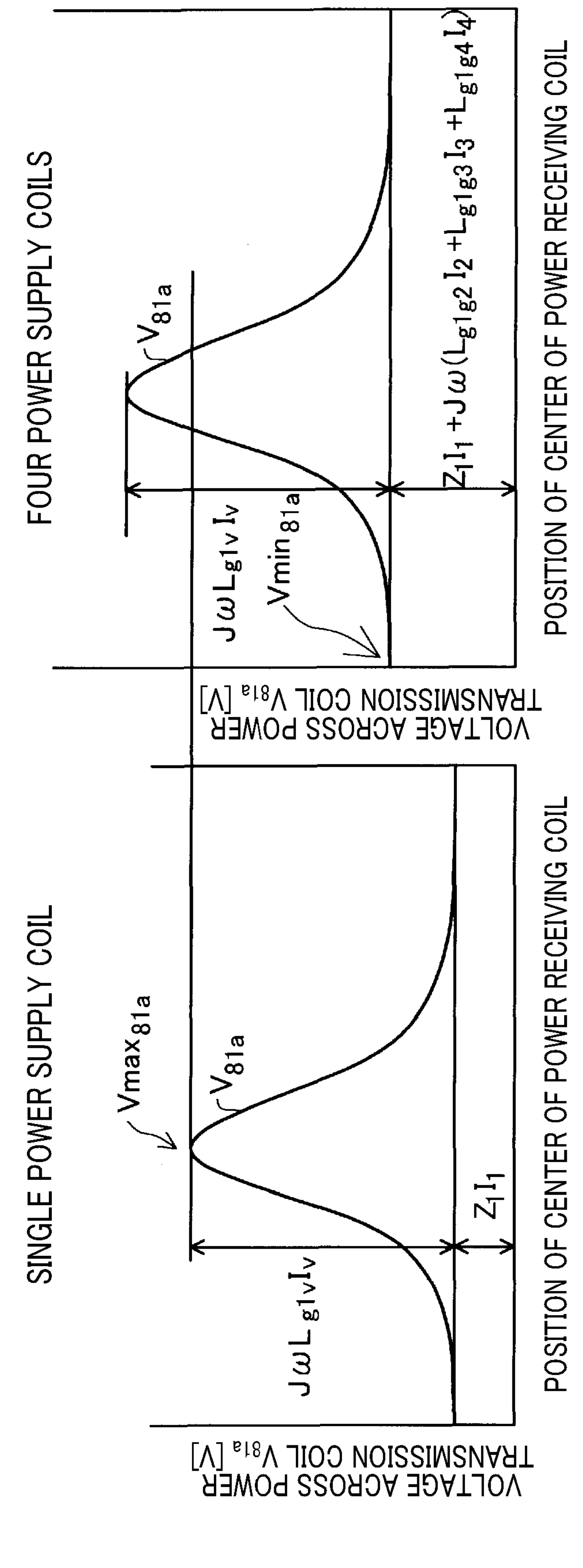
SINGLE POWER SUPPLY COIL
Vmax81a
V81a
JωLg1vIv
Z1I1
VOLTAGE ACROSS POWER TRANSMISSION COIL V81a [V]
POSITION OF CENTER OF POWER RECEIVING COIL
FOUR POWER SUPPLY COILS
V81a
JωLg1vIv
Vmin81a
Z1I1 +Jω(Lg1g2I2 +Lg1g3I3 +Lg1g4I4)
VOLTAGE ACROSS POWER TRANSMISSION COIL V81a [V]
POSITION OF CENTER OF POWER RECEIVING COIL

FIG.16

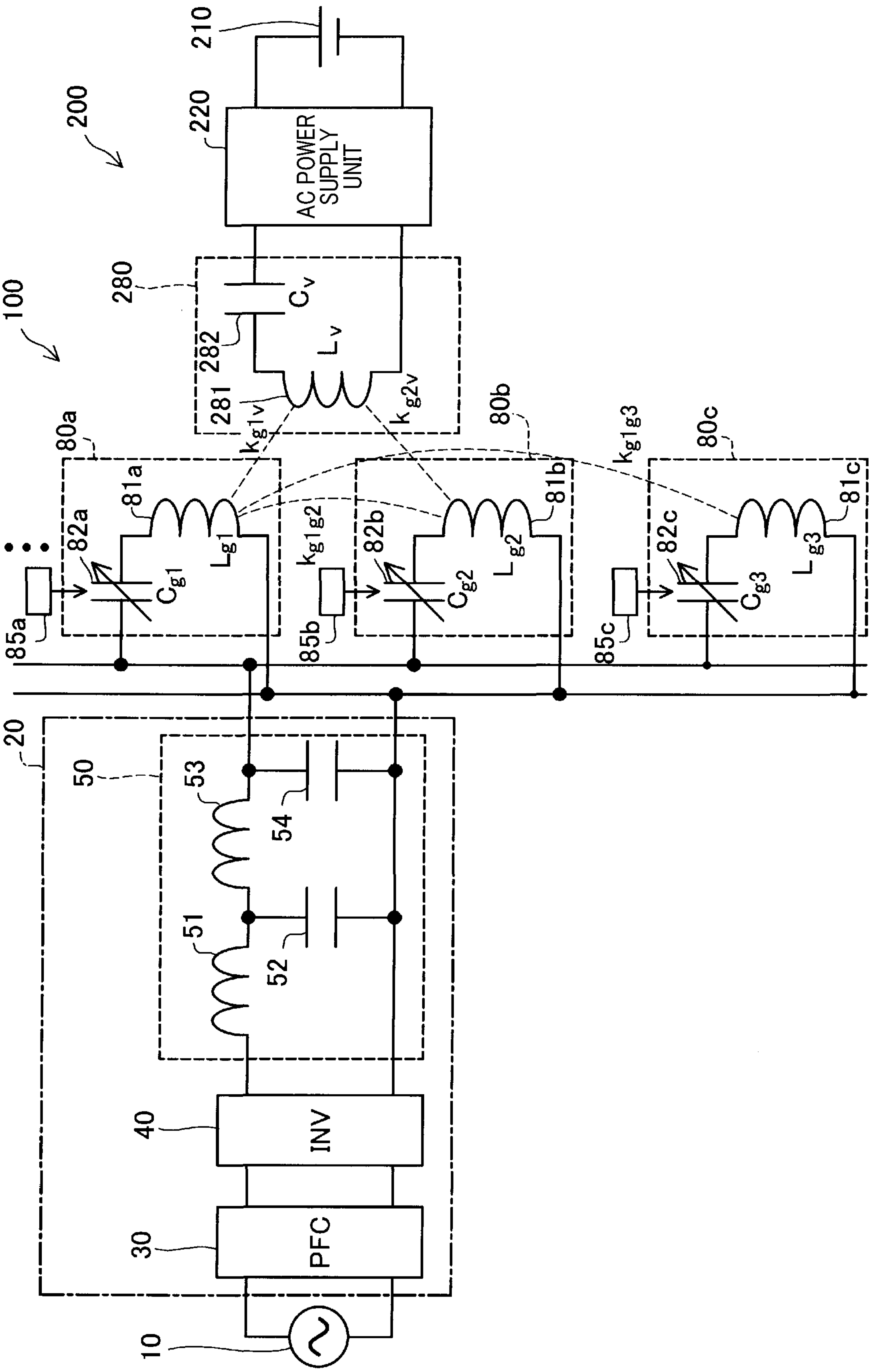
200
210
220
AC POWER SUPPLY UNIT
100
280
$C_v$
282
$L_v$
281
$k_{g1v}$
$k_{g2v}$
80a
80b
80c
$k_{g1g3}$
81a
81b
81c
82a
82b
82c
$L_{g1}$
$L_{g2}$
$L_{g3}$
$C_{g1}$
$C_{g2}$
$C_{g3}$
$k_{g1g2}$
85a
85b
85c
20
50
53
54
51
52
40
INV
30
PFC
10

FIG.17

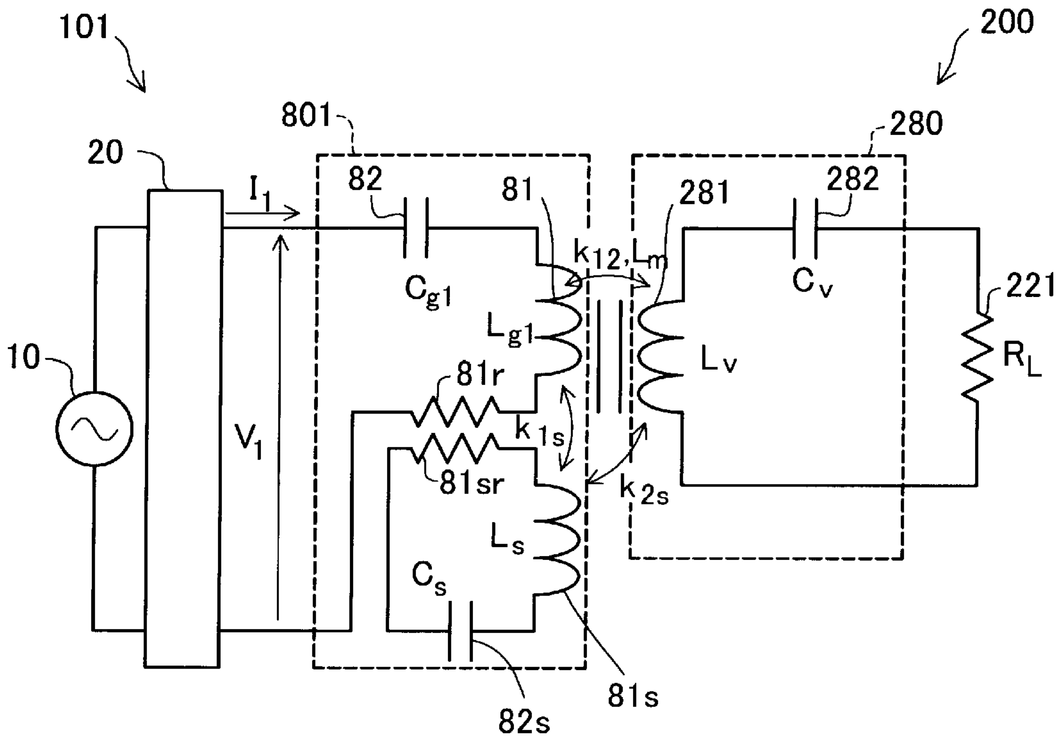
101
200
801
280
20
82
81
281
282
$I_1$
$k_{12}, L_m$
$C_{g1}$
$C_v$
221
$L_{g1}$
10
$L_v$
$R_L$
81r
$V_1$
$k_{1s}$
81sr
$k_{2s}$
$L_s$
$C_s$
81s
82s

FIG.18

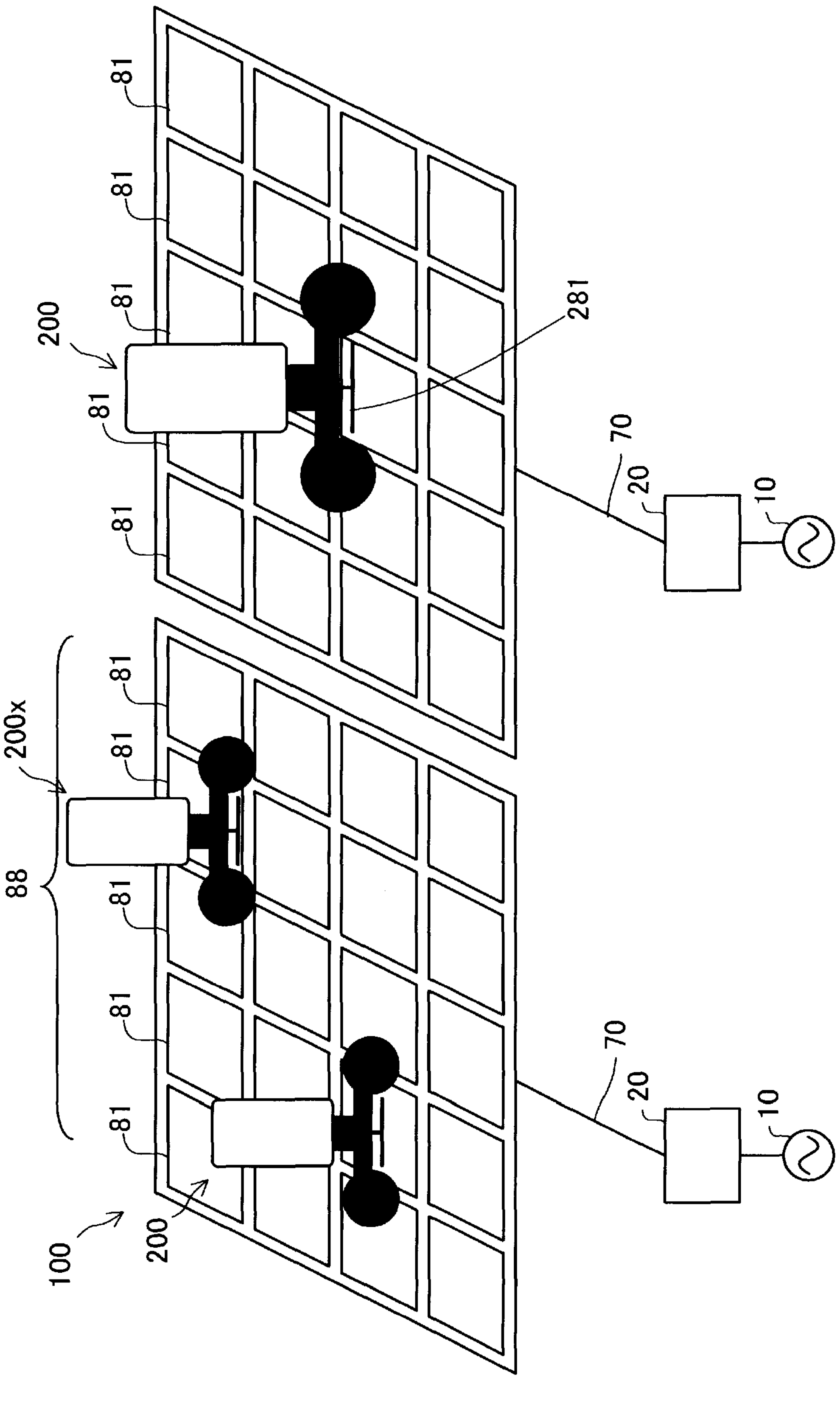

FIG.19

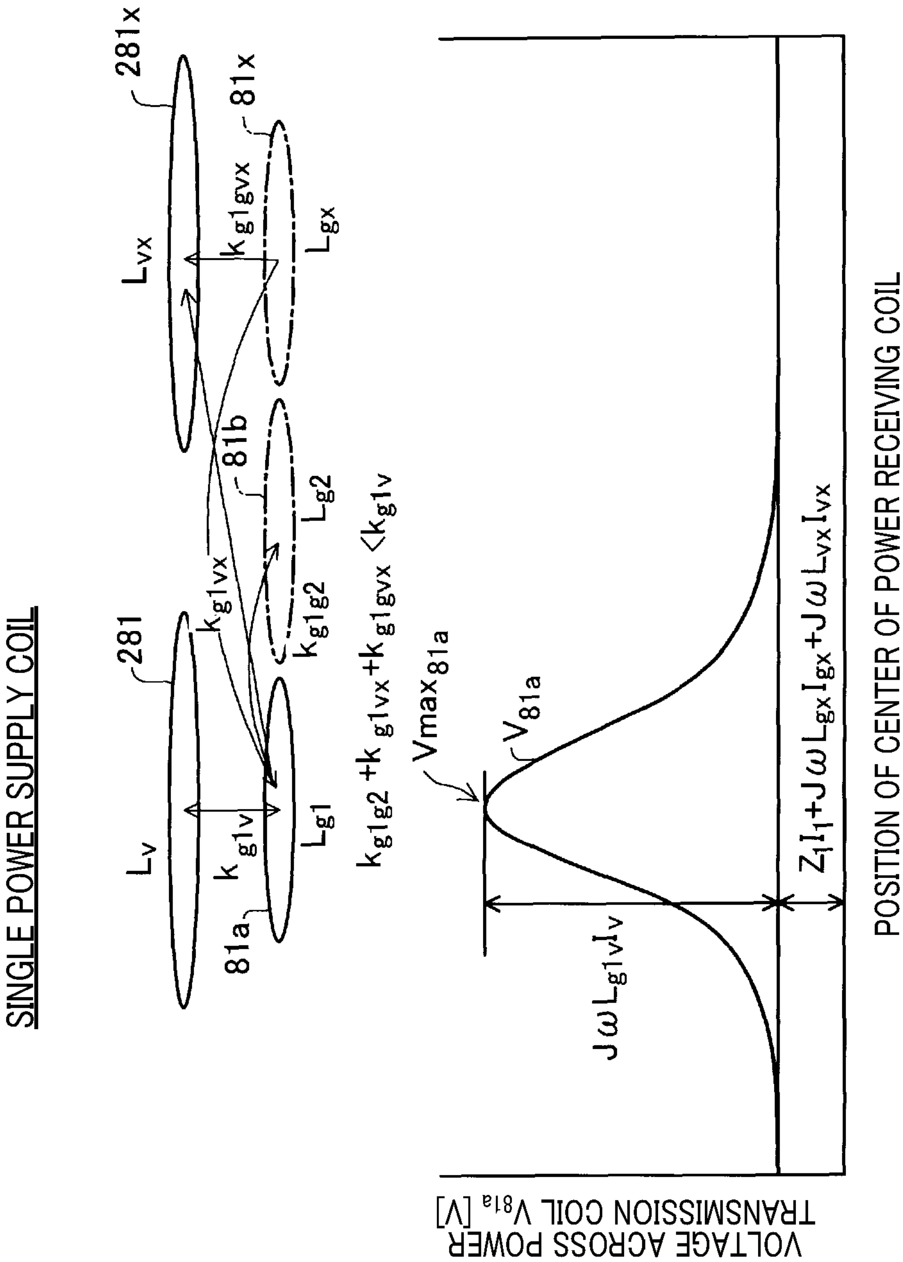
SINGLE POWER SUPPLY COIL
281
281x
81a
81b
81x
$L_v$
$L_{vx}$
$L_{g1}$
$L_{g2}$
$L_{gx}$
$k_{g1v}$
$k_{g1vx}$
$k_{g1g2}$
$k_{g1gvx}$
$k_{g1g2}+k_{g1vx}+k_{g1gvx}<k_{g1v}$
$Vmax_{81a}$
$V_{81a}$
$J\omega L_{g1v}I_v$
$Z_1I_1+J\omega L_{gx}I_{gx}+J\omega L_{vx}I_{vx}$
POSITION OF CENTER OF POWER RECEIVING COIL
VOLTAGE ACROSS POWER TRANSMISSION COIL $V_{81a}$ [V]

FIG.20

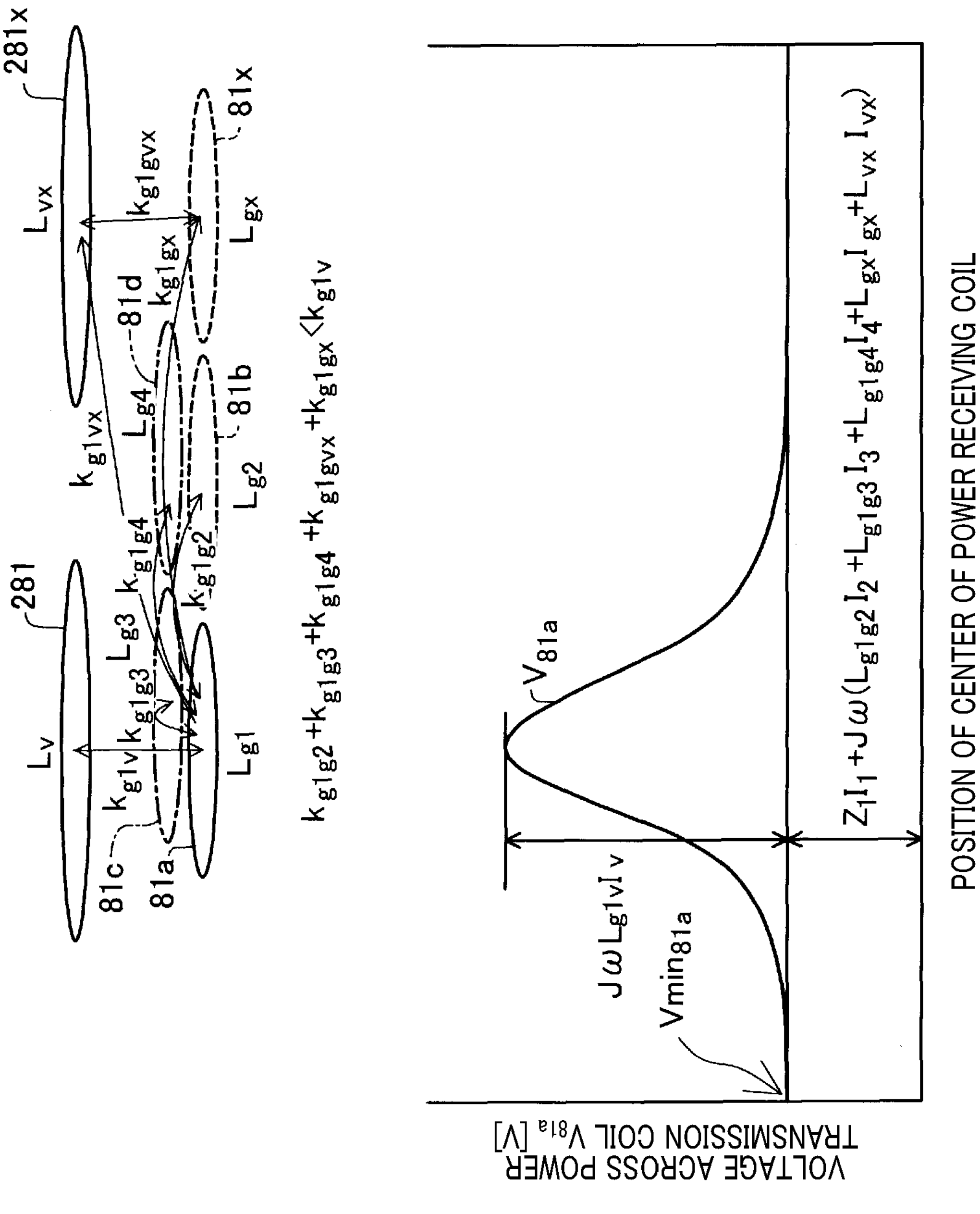
281x
281
81x
81b
81d
81c
81a
Lvx
Lv
Lgx
Lg1
Lg2
Lg3
Lg4
kg1gvx
kg1gx
kg1vx
kg1g4
kg1g2
kg1g3
kg1v
kg1g2 +kg1g3+kg1g4 +kg1gvx +kg1gx<kg1v
V81a
Vmin81a
JωLg1vIv
Z1I1 +Jω(Lg1g2 I2 +Lg1g3 I3 +Lg1g4I4+LgxIgx+Lvx Ivx)
VOLTAGE ACROSS POWER TRANSMISSION COIL V81a [V]
POSITION OF CENTER OF POWER RECEIVING COIL

FIG.21

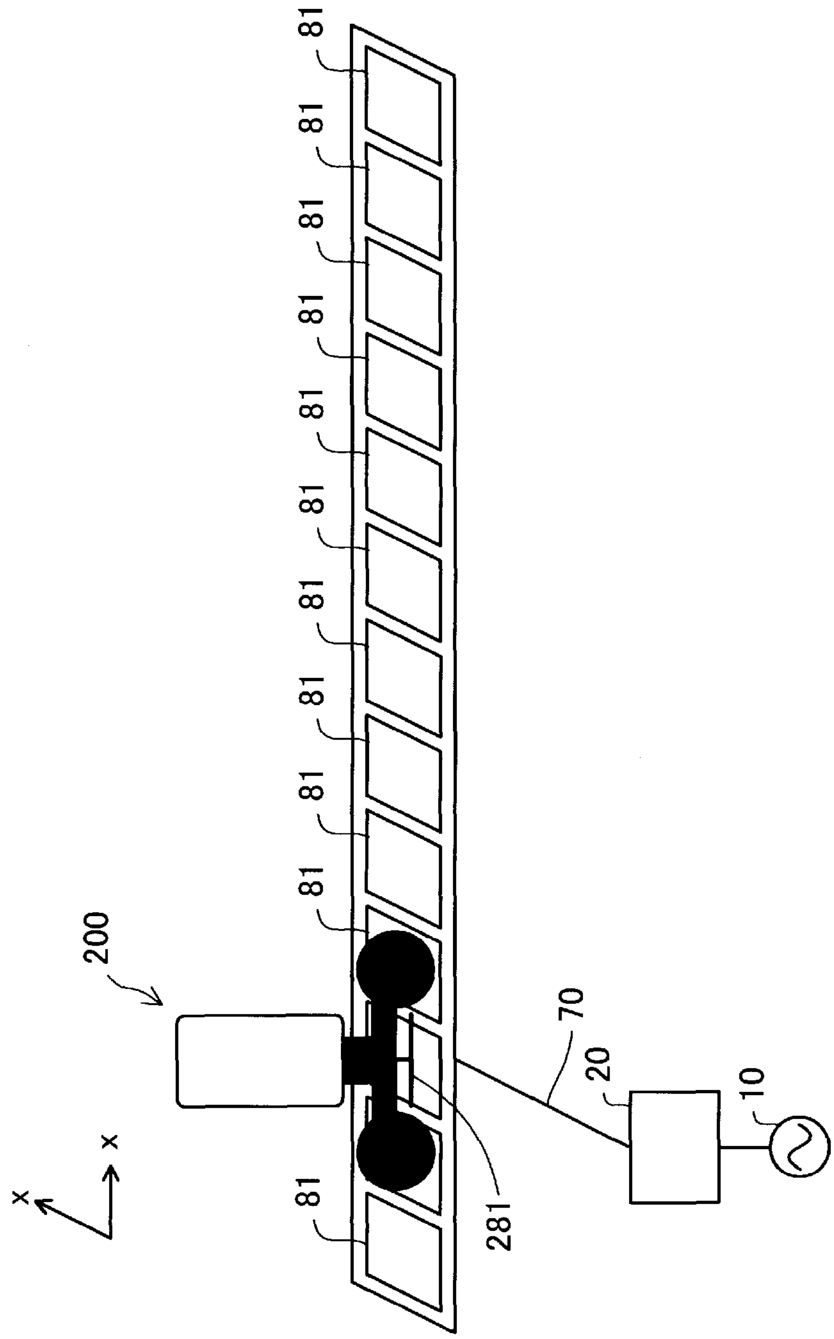

FIG.22

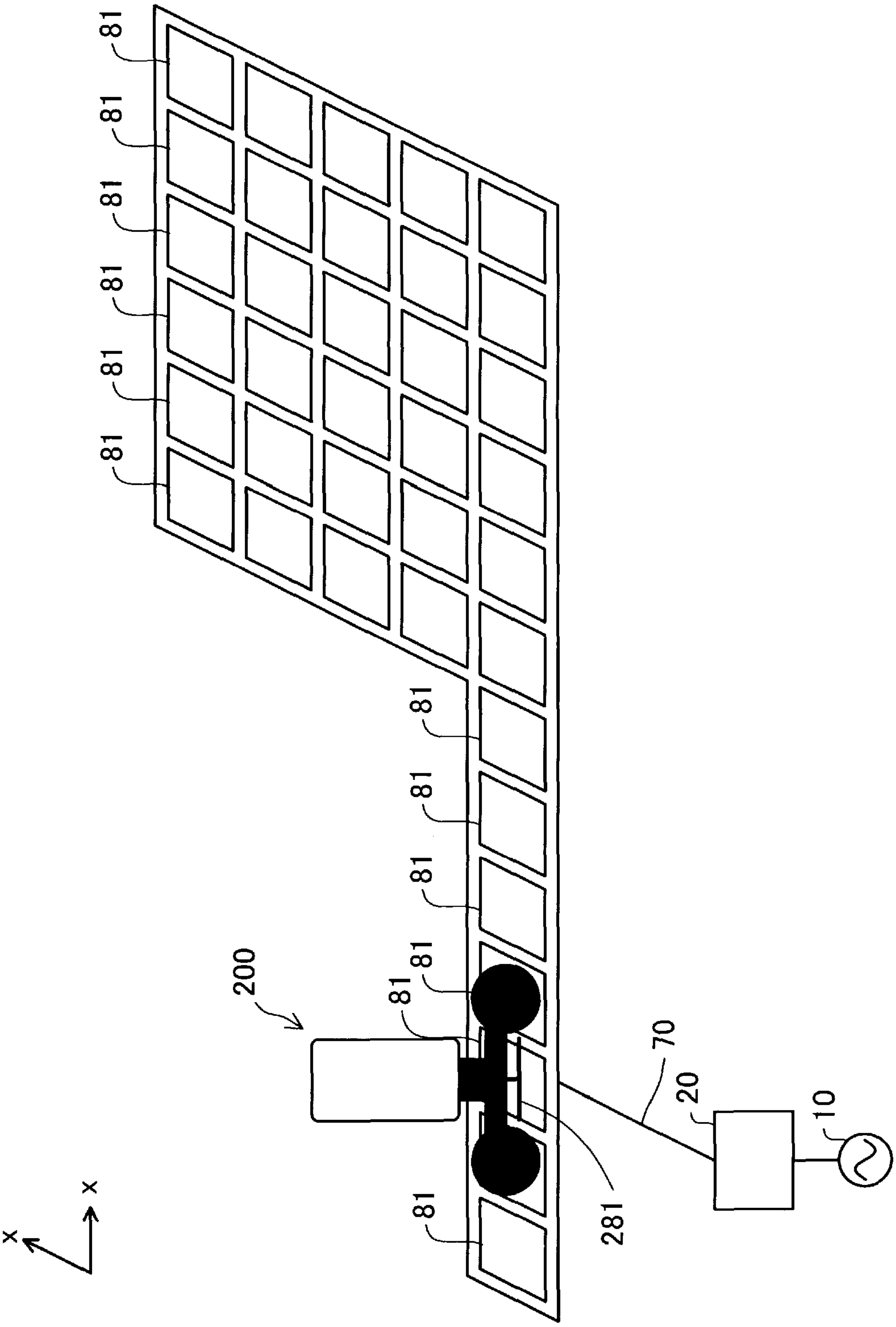

FIG.23

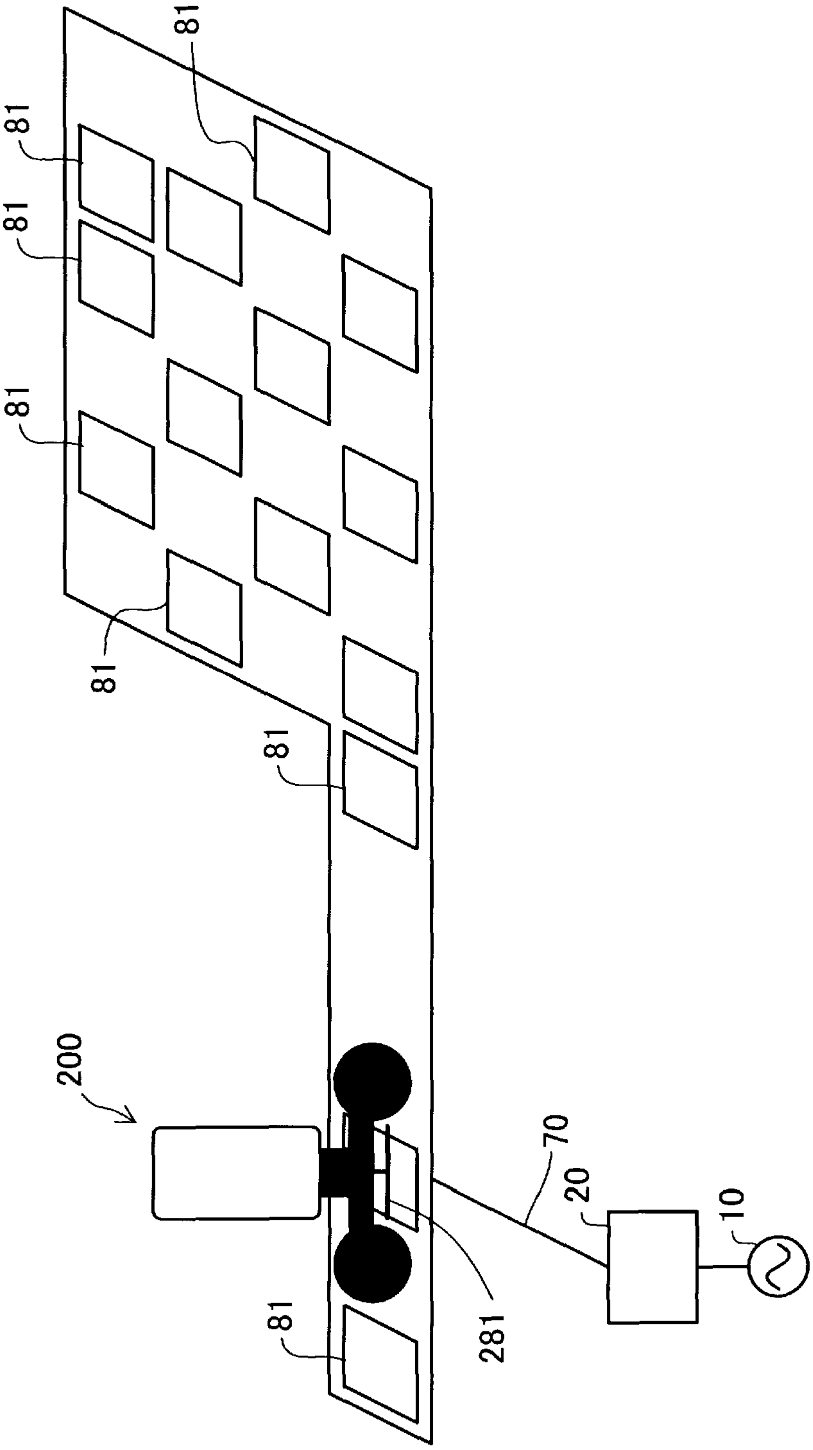

FIG.24

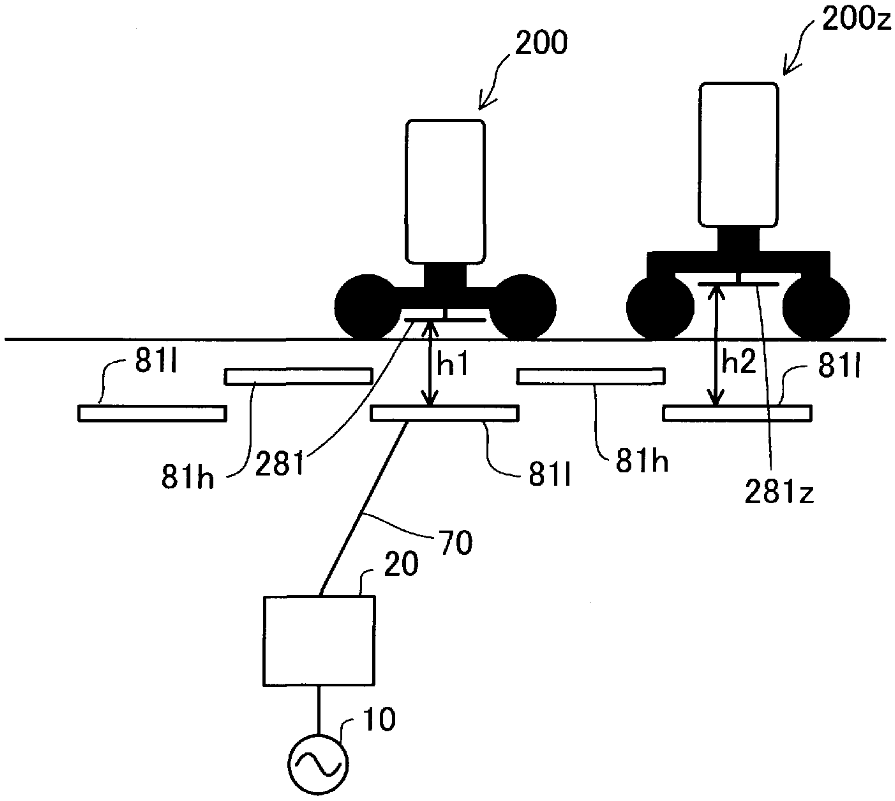

FIG.25

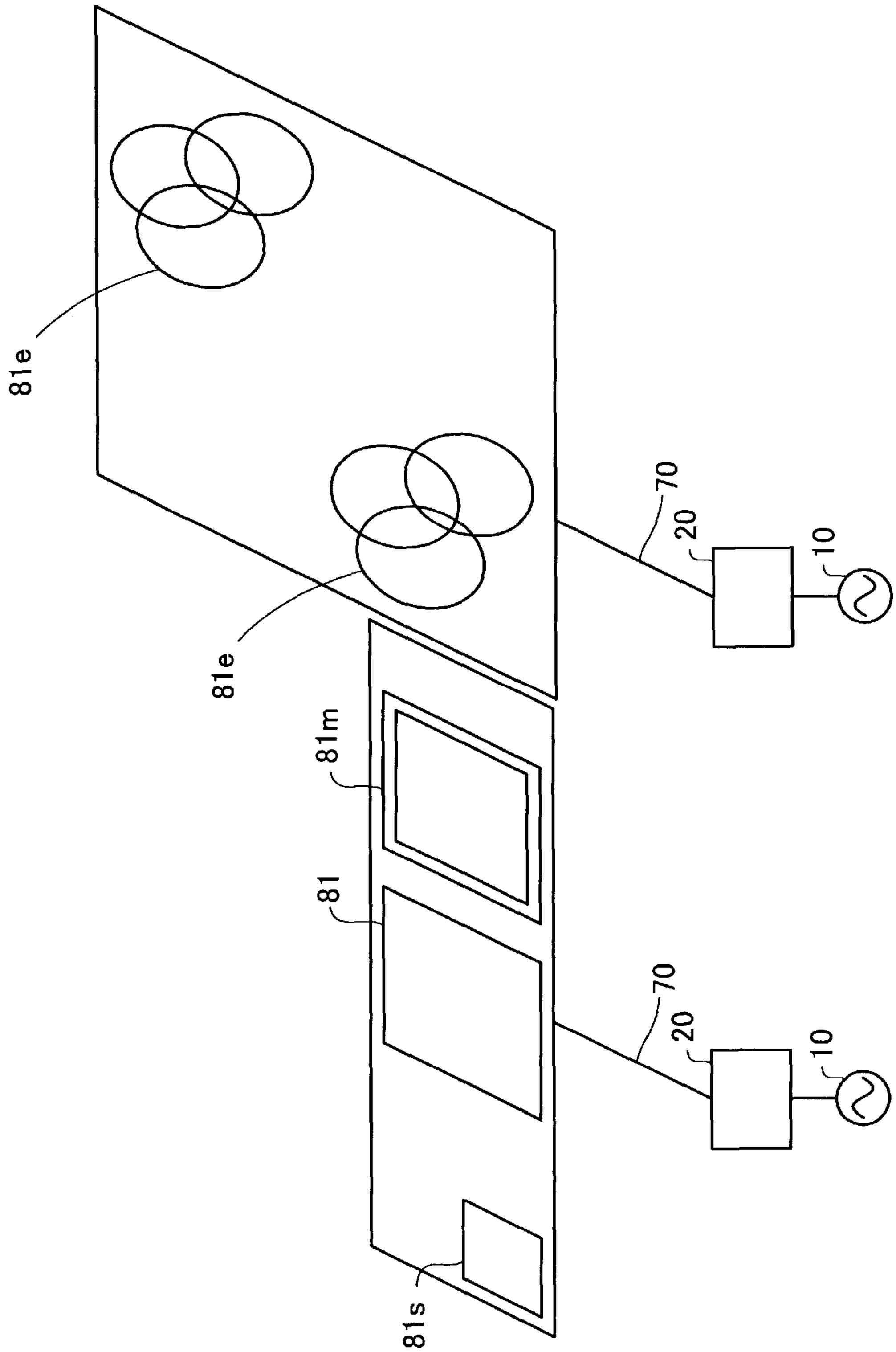

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019071719 A
- JP 2021023094 A